# EUROPÄISCHE PATENTSCHRIFT

(11) **EP 3 371 663 B1**
(45) Veröffentlichungstag und Bekanntmachung des Hinweises auf die Patenterteilung: **02.10.2019**
(21) Anmeldenummer: 16787892.5
(22) Anmeldetag: 28.10.2016
(51) Int. Cl.: G05B 19/042, G05B 9/02, B25J 19/06

(54) **STEUERUNGSSYSTEM FÜR ELEKTRISCH GESTEUERTE ANLAGEN**
CONTROL SYSTEM FOR ELECTRICALLY CONTROLLED INSTALLATIONS
SYSTÈME DE COMMANDE D'INSTALLATIONS À COMMANDE ÉLECTRIQUE

(30) Priorität: 06.11.2015 AT 509512015
(43) Veröffentlichungstag der Anmeldung: 12.09.2018
(73) Patentinhaber: KEBA AG, 4041 Linz (AT)
(72) Erfinder: HÜTTNER, Christian, 4040 Linz (AT); LEHNER, Bernhard, 4242 Hirschbach (AT)
(74) Vertreter: Burger, Hannes
(86) Internationale Anmeldenummer: PCT/EP2016/076066
(87) Internationale Veröffentlichungsnummer: WO 2017/076765

(56) Entgegenhaltungen:
- EP-A2- 1 655 645
- WO-A2-03/088011
- AT-U1- 10 676
- US-A1- 2009 069 943

## Beschreibung

Die Erfindung betrifft ein Steuerungssystem für elektrisch gesteuerte Anlagen.

In der industriellen Praxis finden heutzutage vermehrt vollautomatisierte oder zumindest teilautomatisierte Prozesse, beispielsweise zur Fertigung von Produkten oder Halbzeugen Einzug. Hierbei ist es üblich, an einem Produktionsstandort eine Vielzahl an gleichartigen und/oder verschiedenartigen, elektrisch ansteuerbaren Maschinen zusammenzufassen, um möglichst effiziente Prozessabläufe, und damit möglichst wirtschaftliche Produktion zu ermöglichen. Hierbei können beispielsweise Werkzeugmaschinen, Transporteinrichtungen, Roboter und weitere Anlagenkomponenten bzw. Maschinen zusammengefasst eingesetzt werden.

Derartige elektrisch gesteuerte Anlagen bzw. Anlagenkomponenten können hierbei unterschiedliche Betriebsarten aufweisen. In der Regel werden solche industriellen Anlagen bzw. Anlagenkomponenten die meiste Zeit in einem sogenannten Automatikmodus betrieben, bei welchem ein vollautomatischer, programmgesteuerter Betrieb ohne aktive Partizipation einer menschlichen Bedienperson durchgeführt wird, bzw. obliegen einer menschlichen Person während einer Durchführung von Prozessabläufen im Automatikmodus allenfalls Überwachungsaufgaben.

Für bestimmte Verfahrensabläufe und bei besonderen Ereignissen ist eine vollautomatisierte Betriebsführung jedoch ungeeignet oder sogar nicht realisierbar, und müssen solche Verfahrensabläufe in halbautomatisierten oder sogar manuellen Betriebsmodi der Anlage oder Anlagenkomponente durchgeführt werden. Ein halbautomatischer oder manueller Betriebsmodus kann beispielsweise bei einer Inbetriebnahme einer neuen Anlagenkomponente bzw. Maschine, beim Einrichten eines neuen Werkzeugs, beim sogenannten Teachen von Roboten, beim Positionieren von Maschinenachsen, bei einer Störungsbehebung, oder etwa bei Wartungs- oder Instandsetzungsarbeiten erforderlich sein.

Bei den meisten industriellen Anlagen ist die Ausgestaltung der Anlagenkomponenten bzw. Maschinenkomponenten, bzw. die Art einer jeweiligen Prozessführung dergestalt, dass Energien, Kräfte, Massen, Bewegungen, Stoffe und so weiter beteiligt sind, welche im Prinzip eine potentielle Gefahr für die Gesundheit oder sogar das Leben von Menschen darstellen können. Üblicherweise werden Bereiche einer Anlage oder Maschine, welche potentiell gefährlich für menschliche Personen sind, durch diverse Sicherheitseinrichtungen, wie etwa Bodenmarkierungen, überwachte Schutzzäune, Abdeckungen, Schutztüren und Dergleichen gesichert. Zumindest für den vollautomatischen Betrieb der Anlagen oder Anlagenkomponenten sind solche abgesicherte Bereiche für Menschen durch solche Maßnahmen zumindest kenntlich gemacht, in vielen Fällen ist der Zugang für menschliche Personen dadurch sogar versperrt. Bei einem teilautomatischen Betrieb oder manuellen Betrieb müssen solche Sicherungsmaßnahmen oftmals jedoch vorübergehend außer Kraft gesetzt werden, bzw. der Zugang zu einem potentiell gefährlichen Bereich einer Anlagenkomponente, etwa für speziell geschulte Bedienpersonen ermöglicht werden. Dies ist im Besonderen deswegen häufig erforderlich, da im halbautomatischen oder manuellen Betrieb häufig Einstellungen an einer Anlagenkomponente vorgenommen werden, bei welchen eine unmittelbare Begutachtung, insbesondere visuelle Beaufsichtigung der Folgen bzw. Auswirkungen der diesbezüglich abgesetzten, beaufsichtigungskritischen Steuerkommandos durch die entsprechende Bedienperson vorteilhaft oder sogar erforderlich ist, beispielsweise beim genauen Positionieren von Greifern oder Werkzeugen.

Hinsichtlich der Bereitstellung von Status- bzw. Maschinen- und Prozessinformationen, sowie für die Vornahme von manuellen Bedienhandlungen werden anstatt örtlich feststehend montierter Anzeige- und Bedienpaneele vermehrt tragbare, mobile Handbediengeräte eingesetzt bzw. gewünscht. Derartige Handbediengeräte sind hierfür üblicherweise sowohl zur Anzeige von Status- und Prozessinformationen, als auch zur Vornahme bzw. Eingabe von Einstellungen bzw. zum manuellen Absetzen von Steuerungskommandos ausgebildet. Je nach Anwendungszweck können solche Handbedieneinheiten bzw. -geräte eine Mehrzahl an Ausgabe- und Eingabemittel aufweisen, etwa grafische Displays zur Anzeige von Informationen, Tastenfelder oder Touchscreens zur Vornahme von Einstellungen und Eingabe von Steuerungsbefehlen, aber auch multidirektional wirkende Eingabeelemente für Steuerungskommandos, etwa steuerknüppelartig ausgeführte Eingabeelemente zum direkten Dirigieren bzw. Steuern von Verstell- bzw. Verfahrbewegungen von Maschinenachsen.

In der überwiegenden Zahl der derzeit üblichen Anwendungsfälle werden kabelgebundene Handbediengeräte verwendet. Die signaltechnische Übertragung von Statusinformationen sowie Übertragung von Steuerungs- und Einstellkommandos zwischen der Handbedieneinheit und wenigstens einer funktionellen, elektronischen Steuerungsvorrichtung für die Anlage oder Anlagenkomponente, sowie die Stromversorgung für das jeweilige Handbediengerät werden hierbei über die jeweilige Kabelverbindung ausgeführt. Solche kabelgebundenen Handbediengeräte, bzw. -einheiten sind zum ständigem Verbleib im Bereich der jeweils zugehörigen Anlagenkomponente bzw. Maschine oder Maschinenkomponente ausgelegt.

In sicherheitstechnischer Hinsicht ist es üblich bzw. oftmals normentsprechend zumindest empfohlen, derartige kabelgebundene Handbedieneinheiten mit manuell betätigbaren Sicherheitsschaltelementen, etwa in der Art von Not-Aus-Schaltern oder sogenannten Zustimmtastern auszustatten. Dies ist aus sicherheitstechnischen Hinsicht beispielsweise zweckmäßig für den oben beschriebenen Fall, dass sich eine Bedienperson zwecks visueller Beaufsichtigung der Auswirkung von abgesetzten, beaufsichtigungskritischen Steuerungskommandos in einem Gefahrenbereich einer Maschine aufhält. Dadurch kann im Falle des Auftretens einer Gefahrensituation die Bedienperson umgehend bzw. mit möglichst geringer Zeitverzögerung durch Betätigen eines Not-Aus oder Not-Stopp-Schalters beispielsweise ein Stoppen von Verstellbewegungen oder ein Stillsetzen der betreffenden Anlagen- oder Maschinenkomponente bewirken.

Aus Gründen wie der Bereitstellung eines erhöhten Bedienungskomforts oder erhöhter Mobilität für Bedienpersonen, wird vermehrt der Wunsch nach kabellosen Lösungen für Handbedieneinheiten bzw. -geräte geäußert. Solche zur kabellosen Übertragung von Signalen ausgebildeten Handbedieneinheiten bzw. -geräte erfüllen im Prinzip bedienkomfortbezogene Wünsche, indem sie beispielsweise einer Bedienperson den Zugriff auf möglichst viele Komponenten einer Anlage von gegebenenfalls jeder Aufenthaltsstelle wenigstens im Bereich der Anlage, beispielsweise über ein entsprechendes Kommunikationsnetzwerk grundsätzlich ermöglichen. Vermehrt werden zur möglichst komfortablen Bedienung von Maschinen auch sogenannte Industrie-Tablets eingesetzt, welche im Wesentlichen robuster ausgestaltete Ausführungsformen der bekannten Tablet-PCs für den Privat- oder Büroeinsatz entsprechen.

Die Anpassbarkeit moderner Handbedieneinheiten bzw. Tablets, beispielsweise hinsichtlich variabler Anordnung von Ausgabe- und Eingabeelementen, etwa via derer graphischer Touchscreen-Benutzeroberflächen, ermöglicht es grundsätzlich, die übliche starre Zuordnung eines Handbediengeräts zu einer bestimmten Maschine oder Anlagenkomponente aufzuheben, und werden vermehrt Handbedieneinheiten favorisiert, welche einer Bedienperson grundsätzlich einen Zugriff auf eine Mehrzahl an Anlagenkomponenten bzw. Maschinen erlauben, um die Flexibilität bzw. Einsatzfähigkeit dieser Handbedieneinheiten zu erweitern.

Jedoch stellen solche drahtlosen Signalübertragungen im Umfeld der industriellen Produktion eine besondere Herausforderung dar, insbesondere betreffend sicherheitsbezogene, insbesondere personensicherheitsbezogene Thematiken. Dies auch in Verbindung mit ausreichender Zuverlässigkeit der drahtlosen Signalübertragung, insbesondere in weitläufigen Funkkommunikationsnetzwerken und Dergleichen.

In diesem Zusammenhang ist zum Beispiel die verwechslungsfreie Zuordnung von an einer Handbedieneinheit eingegebener Steuerungskommandos zu einer bestimmten Maschine oder Maschinenkomponente wichtig. Die diesbezügliche Problematik wird in vielen Fällen dadurch verschärft, dass in industrielle Produktionsanlagen häufig eine Vielzahl an Maschinen bzw. Anlagenkomponenten unmittelbar nebeneinander angeordnet sind, welche Maschinen oftmals ähnlich ausgestaltet, oder sogar gleichartig sind.

Des Weiteren ist es grundsätzlich bei bestimmten, von einer Bedienperson manuell ausgelösten Steuerkommandos zumindest hilfreich oder sogar erforderlich, dass die Auswirkung(en) solcher Steuerungskommandos unmittelbar von der Bedienperson beobachtet, insbesondere visuell beaufsichtigt werden, was eine gewisse Nähe der Bedienperson zur beeinflussten bzw. angesteuerten Anlagenkomponente bzw. Maschine oder Maschinenkomponente voraussetzt. Hierbei sollte beispielsweise bei kabellos kommunikationsfähigen Handbedieneinheiten vermieden werden, dass die Bedienperson den Bereich der Anlagenkomponente verlässt, und aus der Ferne absichtlich oder unabsichtlich beaufsichtigungskritische Steuerungskommandos absetzt, insbesondere solche Steuerungskommandos, welche ein erhöhtes Gefährdungspotential aufweisen. Andererseits soll für eine Bedienperson mit einem Handbediengerät dennoch eine Bewegungsfreiheit gegeben sein, vor allem um der Bedienperson die Einnahme einer günstigen Begutachtungs- bzw. Beaufsichtigungsposition im Bereich der jeweiligen Anlagenkomponente zu ermöglichen bzw. zu erleichtern.

In der Vergangenheit wurden bereits Lösungen für solche Problematiken vorgeschlagen, zum Beispiel in der EP 1 866 712 B1, welche auf die Anmelderin zurückgeht. In der EP 1 866 712 B1 sind Methoden zur technischen Erfassung der Position eines zur drahtlosen Kommunikation ausgebildeten Handbediengerätes relativ zu einer jeweils anzusteuernden Anlage, bzw. zur Überwachung der räumlichen Nähe eines Handbediengerätes zur betreffenden Anlage offenbart.

Hinsichtlich Erhöhung der Sicherheit und Zuverlässigkeit derartiger Steuerungssysteme mit drahtlos kommunizierenden Handbediengeräten besteht jedoch weiterhin Verbesserungsbedarf im Vergleich zu den im Stand der Technik offenbarten Lösungen. Außerdem wird gemäß dem Stand der Technik die physisch vollkommen uneingeschränkte Bewegungsfreiheit eines alleinig drahtlos datengekoppelten Handbediengerätes durch einen vergleichsweise hohen technische Aufwand zur Erzielung eines sicheren und zugleich hochverfügbaren Betriebes erkauft, welcher hohe Anschaffungskosten verursacht.

In der US 2009/069943 A1 ist ein Robotersystem mit einer Robotersteuereinheit, welche einen Roboter in einem Wiederholungsmodus automatisiert steuert, offenbart. Der Roboter befindet sich innerhalb eines Schutzzaunes, welcher Schutzzaun eine Schutzzauntür aufweist. Das Robotersystem umfasst eine Lehreinheit, mittels welcher ein sogenanntes Teaching von innerhalb des Schutzzauns durchgeführt wird. Das Teaching ist die Basis für das automatisierte Steuern des Roboters im Wiederholungsmodus. Die Steuerungskommandos für das Teaching werden hierbei via eine drahtlose Verbindung von der Lehreinheit an die Steuerungseinheit übertragen. Nach Beendigung eines Teachings wird zum einen detektiert, ob die Schutzzauntür geschlossen ist. Des Weiteren ist eine Strom-Zuführeinheit für die Lehreinheit vorgesehen, wobei die Lehreinheit in einer vorgegebenen Position zur Zuführeinheit platziert wird. Die Zuführeinheit weist eine Lehreinheitsdetektionsvorrichtung auf. Wenn die Lehreinheit korrekt in der vorgegebenen Position der Zuführeinheit platziert ist, wird von der Lehreinheitsdetektionsvorrichtung ein Lehreinheit-Vorhandensignal ausgegeben. Die Ausgabe des Lehreinheit-Vorhandensignal und die Detektion einer geschlossenen Schutzzauntür sind hierbei Voraussetzung zur Freigabe der automatisierten Steuerung des Roboters im Wiederholungsmodus durch die Robotersteuereinheit. Wenn die Lehreinheit in der korrekten Position der Zuführeinheit angeordnet ist, wird außerdem ein Akku der Lehreinheit geladen. In sicherheitstechnischer Hinsicht behandelt die US 2009/069943 A1 jedoch nur Maßnahmen betreffend die automatisierte Steuerung des Roboters im Wiederholungsmodus.

Aufgabe der vorliegenden Erfindung war es, die bestehenden Nachteile des Standes der Technik zu überwinden und ein verbessertes Steuerungssystem zur Verfügung zu stellen, durch welches sicherheitstechnische Anforderungen auf kostengünstige und zuverlässige Weise erfüllt werden können, während gleichzeitig die Flexibilität der eingesetzten Handbediengeräte und die Bewegungsfreiheit von Bedienpersonen verbessert wird.

Diese Aufgabe wird durch ein Steuerungssystem gemäß den Ansprüchen gelöst.

Das bereitgestellte Steuerungssystem für elektrisch gesteuerte Anlagen, umfasst zumindest eine elektronische Steuerungsvorrichtung zur Überwachung und Steuerung einer Anlage oder von Anlagenkomponenten.

Außerdem umfasst das Steuerungssystem wenigstens eine tragbare, mobile Handbedieneinheit zur Anzeige von Informationen und zur Eingabe von Steuerungskommandos, wobei die Handbedieneinheit mit einer internen Stromversorgungseinheit für die zeitweilige, elektrische Stromversorgung ausgestattet ist.

Des Weiteren ist eine drahtlose Kommunikationsverbindung zwischen der zumindest einen Steuerungsvorrichtung und der Handbedieneinheit zur Übertragung von Informationen und von Steuerkommandos zwischen der Handbedieneinheit und der Steuerungsvorrichtung ausgebildet, bzw. können entsprechende Steuerungskommandos für die zumindest eine Steuerungsvorrichtung bereitgestellt werden.

Wesentlich ist, dass zumindest ein formflexibles, materielles Koppelmittel mit begrenzter maximaler Längserstreckung, welches Koppelmittel via zumindest eine werkzeuglos betätigbare Koppelvorrichtung zum wahlweisen Herstellen und Lösen einer physischen Bindung zwischen der Handbedieneinheit und wenigstens einer räumlich feststehend angeordneten, maschinenseitigen Koppelgegenstelle vorgesehen ist.

Außerdem ist zumindest eine Kopplungszustandsüberwachungsvorrichtung zur fortlaufenden Erfassung und Überwachung eines mechanischen Kopplungszustandes der zumindest einen Koppelvorrichtung und/oder zur fortlaufenden Erfassung und Überwachung eines signaltechnischen Verbindungszustandes via das Koppelmittel zwischen der Handbedieneinheit und der wenigstens einen Koppelgegenstelle ausgebildet.

Hierbei ist das Steuerungssystem zur Freigabe von beaufsichtigungsrelevanten, insbesondere von durch eine Bedienperson unmittelbar zu überwachender Steuerungskommandos im Falle der Erfassung eines hergestellten Kopplungszustandes oder eines bestehenden Verbindungszustandes, und zur Sperre von beaufsichtigungsrelevanten Steuerungskommandos im Falle der Erfassung eines gelösten Kopplungszustandes oder eines unterbrochenen Verbindungszustandes ausgebildet.

Durch ein derartig ausgebildetes Steuerungssystem ist eine technisch einfach umzusetzende und hoch effektive Lösung bereitgestellt, um eine zuverlässige und gleichzeitig möglichst sichere Bedienung von Maschinen bzw. Anlagenkomponenten zu erlauben. Eine Verbesserung der Sicherheit, insbesondere der Personensicherheit wird hierbei dadurch erreicht, dass die Eingabe von beaufsichtigungsrelevanten Steuerungskommandos an der Handbedieneinheit nur dann Freigeschalten ist, wenn durch die zumindest eine Koppelzustandsüberwachungsvorrichtung ein hergestellter Kopplungszustand der zumindest einen Koppelvorrichtung, oder ein bestehender signaltechnischer Verbindungszustand via das Koppelmittel zwischen Handbedieneinheit und der wenigstens einen Koppelgegenstelle erfasst wird. Andernfalls ist die Eingabe solcher beaufsichtigungsrelevanten Steuerungskommandos, insbesondere solche Steuerungskommandos, deren Auswirkung von einer Bedienperson unmittelbar überwacht werden sollten oder überwacht werden müssen, via die Handbedieneinheit gesperrt.

Dadurch kann beispielsweise vermieden werden, dass eine Bedienperson via die Handbedieneinheit absichtlich oder unabsichtlich beaufsichtigungsrelevante Steuerungskommandos auslöst, während sich die Bedienperson mit der Handbedieneinheit fernab bzw. außer Sichtweite der betreffenden Anlagenkomponente, aber noch innerhalb der Kommunikationsreichweite der drahtlosen Kommunikationsverbindung aufhält. Insbesondere können potentielle Gefahrensituationen durch derartiges, blindes Auslösen von beaufsichtigungsrelevanten bzw. beaufsichtigungskritischen Steuerungskommandos vermieden werden. Von Vorteil ist aber auch, dass eine Bedienperson bei einem manuellen Bedienen einer Anlagenkomponente durch Auslösen beaufsichtigungsrelevanter Steuerungskommandos, aufgrund der erzwungenen Nähe zur Anlagenkomponente auftretende Gefahrensituation unmittelbar wahrnehmen kann, und möglichst schnell und effizient auf eine Gefahrensituation reagieren kann.

Unter einer Kopplungszustandsüberwachungsvorrichtung wird hierin jedwede Überwachungsvorrichtung verstanden, mittels welcher ein angeschlossener bzw. verbundener Zustand des Koppelmittels grundsätzlich festgestellt werden kann. Darunter sind subsummiert einerseits sowohl Erfassungsmittel zu verstehen, welche zwischen einem hergestellten bzw. aktivierten Kopplungszustand der Koppelvorrichtung und einem gelösten bzw. deaktivierten Kopplungszustand der Koppelvorrichtung unterscheiden können. Die Koppelvorrichtung kann beispielsweise durch einen Permanentmagneten an dem Koppelmittel und einem Permanentmagneten an der Handbedieneinheit gebildet sein, welche Permanentmagneten zur gegenseitigen Anziehung ausgebildet sind.

Andererseits ist unter einer Kopplungszustandsüberwachungsvorrichtung auch eine Vorrichtung zu verstehen, welche grundsätzlich zwischen einer bestehenden Bindung bzw. Verbindung, beispielsweise einer elektrischen Verbindung zwischen der Handbedieneinheit und der wenigstens einen Koppelgegenstelle, und einer unterbrochenen Verbindung zwischen der Handbedieneinheit und der wenigstens einen Koppelgegenstelle unterscheiden kann. In diesem Sinne ist der Begriff Kopplungszustandsüberwachungsvorrichtung synonym mit Bindungszustandsüberwachungsvorrichtung zu verstehen.

Die logischen bzw. programmtechnischen Prozesse zur Freigabe oder Sperre der Steuerungskommandos können beispielsweise in einer Steuerungsvorrichtung des Steuerungssystems, welche zur Überwachung und Steuerung der Anlage bzw. von Anlagenkomponenten ausgebildet ist, implementiert sein. Alternativ können diese Prozesse auch in einer weiteren, kommunikationstechnisch mit der zumindest einen Steuerungsvorrichtung verbundenen Steuerungsvorrichtung, insbesondere einer Sicherheitssteuerung bzw. einer Sicherheitsvorrichtung implementiert sein. Ebenso ist es möglich, dass diese logischen, programmtechnischen Prozesse in einer Steuerungsvorrichtung der wenigstens einen Handbedieneinheit selbst abgebildet sind. Die Sperre von beaufsichtigungsrelevanten Steuerungskommandos kann beispielsweise durch funktionale und anzeigetechnische Sperre von den entsprechenden Steuerungskommandos zugewiesenen Eingabeelementen an der Handbedieneinheit bzw. einer graphischen Benutzeroberfläche der Handbedieneinheit erfolgen. Des Weiteren oder zusätzlich ist es aber auch möglich, dass eine jeweils zum Empfang der entsprechenden Steuerungskommandos ausgebildete Steuerungsvorrichtung des Steuerungssystems zur Nichtumsetzung von empfangenen, beaufsichtigungsrelevanten Steuerungskommandos ausgebildet ist.

Das Auslösen von Steuerungskommandos, deren Auswirkung keiner unmittelbaren Beaufsichtigung, insbesondere keiner unmittelbaren visuellen Beobachtung durch eine Bedienperson bedürfen, sowie datentechnischer Informationsaustausch zwischen der Handbedieneinheit und der oder den Steuerungsvorrichtung(en) der Anlage ist demgegenüber innerhalb des Bereichs der Kommunikationsreichweite der drahtlosen Kommunikationsverbindung nahezu unbegrenzt möglich. Dadurch ist eine Bedienperson via die Handbedieneinheit zum Beispiel befähigt, von nahezu jeder beliebigen Position innerhalb der Reichweite der drahtlosen Kommunikationsverbindung Informationen über Betriebs- bzw. Statuszustände diverser Anlagenkomponenten abzufragen, und sich via die Handbedieneinheit anzeigen zu lassen. Auf diese Weise ist auch ein wahlweiser drahtloser, datentechnischer Zugriff auf eine Vielzahl oder alle Anlagenkomponenten von nahezu jedem beliebigen Ort möglich. Die damit einhergehende, nahezu uneingeschränkte Bewegungsfreiheit ist vor allem vorteilhaft hinsichtlich Bedienkomfort, aber auch Bedienungseffizienz und generell vorteilhaft hinsichtlich der Effizienz beim Beaufsichtigen und Warten einer größeren Anzahl von Maschinen. Gleichzeitig ist jedoch sichergestellt, dass beaufsichtigungsrelevante Bedienhandlung für Anlagenkomponenten bzw. Maschinen oder Maschinenkomponenten via die Handbedieneinheit, nur von einem Nahbereich der jeweiligen Anlagenkomponente ausgelöst werden können, da zum Freischalten der betreffenden, beaufsichtigungsrelevante Steuerungskommandos eine physische Anbindung der Handbedieneinheit an eine jeweilige räumlich feststehend angeordnete, maschinenseitige Koppelgegenstelle erforderlich ist.

Durch die innovativen Merkmale des Steuerungssystems kann außerdem eine sichere Zuordnung einer Handbedieneinheit zu einer bestimmten Koppelgegenstelle dargestellt werden, da durch das materielle Koppelmittel im angekoppelten zustand eine physische Bindung zu einer bestimmten Koppelgegenstelle unmittelbar, insbesondere unmittelbar visuell von der Bedienperson wahrnehmbar ist. Durch die formflexible Ausgestaltung des Koppelmittels ist einer Bedienperson auch im angekoppelten bzw. mit einer Koppelgegenstelle verbundenen Zustand ausreichend Bewegungsfreiheit bereitgestellt, um eine möglichst günstige Beobachtungs- bzw. Beaufsichtigungsposition im Bereich der Koppelgegenstelle bzw. der entsprechenden Anlagenkomponente einnehmen zu können

Bei einer Weiterbildung kann vorgesehen sein, dass das Koppelmittel eine maximale Längserstreckung, ausgewählt aus einem Bereich zwischen 2 Meter und 25 Meter aufweist.

Durch den angegebenen Bereich ist für nahezu alle möglichen Arten von Anlagen, Anlagenkomponenten bzw. Maschinen eine ausreichende Lösung hinsichtlich der Bewegungsreichweite für eine Bedienperson bereitgestellt, um sich entsprechend von einer Koppelgegenstelle entfernen zu können. Bei manchen Komponenten einer Anlage können hierbei kürzere Bewegungsreichweiten von Vorteil sein, bei manchen Komponenten wiederum größere Bewegungsreichweiten für eine Bedienperson zweckmäßig sein.

Eine jeweils geeignete Länge des Koppelmittels ist dabei mit Bedacht auf Erfordernisse wie etwa der Einsehbarkeit der durch die Bedienhandlung beeinflussten Anlagenkomponenten bzw. Maschinenteile, eines Mindestabstands zu benachbarten und verwechselbar ähnlichen Maschinen und/oder der erforderlichen Bewegungsfreiheit während der Vornahme der Bedienhandlungen auszuwählen. Die Länge kann beispielsweise so bemessen sein, dass die Bedienperson einen bestimmten Gefahrenbereich einer Anlage bzw. Anlagenkomponente zwar einsehen, jedoch während einer Auslösung von beaufsichtigungsrelevanten Kommandos via die Handbedieneinheit nicht betreten kann, bzw. dass die Bedienperson zur Einhaltung eines hinreichenden Sicherheitsabstandes zu einem solchen Gefahrenbereich gezwungen ist. Bevorzugt weist das Koppelmittel eine maximale Längserstreckung zwischen 5 Meter und 15 Meter auf.

Bei einer vorteilhaften Ausgestaltungsform des Steuerungssystems kann vorgesehen sein, dass zumindest alle in Bezug auf Personensicherheit kritischen Steuerungskommandos als beaufsichtigungsrelevante Steuerungskommandos eingestuft sind.

Dadurch kann der sichere Betrieb bzw. die sichere Bedienung der Anlage, im Besonderen die Personensicherheit nochmalig weiter verbessert werden. Durch die erzwungene Anwesenheit der Bedienperson beim Auslösen von personensicherheitskritischen Steuerungskommandos im Nahbereich einer entsprechenden Anlagenkomponente kann beispielsweise ein Auslösen der Steuerungskommandos unterbleiben, wenn sich weitere Personen im potentiellen Gefahrenbereich befinden. Außerdem kann die ausführende Bedienperson das Auftreten einer Gefahrensituation umgehend wahrnehmen und entsprechende Handlungen zum Entschärfen der Gefahrensituation setzen.

Eine weitere zweckmäßige Ausführungsform kann dadurch gebildet sein, dass die wenigstens eine Koppelvorrichtung durch ein an der Handbedieneinheit ausgebildetes Anschlusselement, sowie durch ein an einem Längsende des zumindest einen Koppelmittels angeordnetes und zum zum werkzeuglos ausführbaren, form- und/oder kraftschlüssigen Verbinden mit dem Anschlusselement vorgesehenes Verbindungselement gebildet ist.

Hierdurch ist eine einfach und dennoch effizient benutzbare Ausgestaltungsvariante für die wenigstens eine Koppelvorrichtung bereitgestellt. Im Besonderen gestattet eine derart ausgeführte Koppelvorrichtung ein unmittelbares Herstellen einer Verbindung zwischen der Handbedieneinheit und einer Koppelgegenstelle. Bevorzugt kann eine Koppelung zwischen dem Verbindungselement und dem korrespondierendem Anschlusselement hierbei ohne weitere Betätigungsmittel bzw. ohne weitere erforderliche Handlungen seitens der Bedienperson erfolgen. Das Verbindungselement kann hierbei beispielsweise als elektrischer Stecker, und das Anschlusselement als korrespondierende Buchse für den Stecker ausgebildet sein, wodurch die Koppelvorrichtung durch einen elektrischen Steckkontakt gebildet wäre.

In diesem Zusammenhang kann es vorteilhaft sein, wenn die Kopplungszustandsüberwachungsvorrichtung durch eine elektrische Schaltkontakterfassungsvorrichtung zur Detektion eines mit dem Anschlusselement gekoppelten Verbindungselementes ausgebildet ist.

Hierdurch kann eine einfache anzuordnende, aber dennoch effiziente Koppelzustandsüberwachungsvorrichtung bereitgestellt werden. Über einen Schaltkontakt, welcher beispielsweise beim Koppeln des Verbindungselementes einen Schaltkreis schließen kann, und bei Ablösen des Verbindungselementes von dem Anschlusselement den entsprechenden Schaltkreis öffnen kann, ist eine Information über den jeweiligen Koppelzustand der Koppelvorrichtung in einfacher Art und Weise erhaltbar.

Es kann aber auch sinnvoll sein, dass die Kopplungszustandsüberwachungsvorrichtung durch eine berührungslos erfassende Sensorvorrichtung zur Erfassung der Anwesenheit und/oder der Abwesenheit des Verbindungselementes an dem Anschlusselement ausgebildet ist.

Vorteilhaft bei berührungslos erfassenden Sensorvorrichtungen bzw. Sensoren ist, dass diese nahezu verschleißfrei, und somit langfristig zuverlässig einsetzbar sind. Ein weiterer Vorteil von berührungslos erfassenden Sensoren ist dadurch begründet, dass keine besonders passgenaue mechanische Ausgestaltung zwischen dem Anschlusselement und dem Verbindungselement erforderlich ist, und hierdurch Toleranzen möglich sind. Hierdurch ist beispielsweise auch eine Mehrfachnutzung von in einer Handbedieneinheit für andere Zwecke bereits vorgesehenen Sensorvorrichtungen ,wie beispielsweise einer eingebauten Kamera oder eine NFC-Schnittstelle grundsätzlich möglich. In weiterer Folge sind dadurch auch nicht speziell sicherheitstechnisch ausgerüstete und nicht speziell für eine Ankopplung über ein Koppelmittel ausgestattete, Ein-/Ausgabegeräte aus dem Consumerbereich, wie etwa sogenannte Tablets, zumindest eingeschränkt für bestimmte Bedienaufgaben grundsätzlich verwendbar, beispielsweise als Bestandteil einer Handbedieneinheit.

Bei einer Weiterbildung kann vorgesehen sein, dass das Steuerungssystem mehrere voneinander distanzierte maschinenseitige Koppelgegenstellen umfasst, welchen Koppelgegenstellen jeweils elektrisch steuerbaren Anlagenkomponenten oder elektrisch steuerbaren Maschinen oder elektrisch steuerbare Maschinenkomponenten ortsnah zugeordnet sind.

Dadurch kann eine Vielzahl an gleichartigen oder unterschiedlichen Anlagenkomponenten einer Anlage mittels des Steuerungssystems, bzw. via die wenigstens eine Handbedieneinheit beaufsichtigt und gesteuert werden. Im Besonderen ist es möglich, mehrere, räumlich feststehende Koppelgegenstellen jeweils in einem Nahbereich der zugehörigen bzw. korrespondierenden Anlagenkomponenten bzw. Maschinen anzuordnen, sodass sich eine Bedienperson zum Auslösen beaufsichtigungskritischer Steuerungskommandos jeweils zur betreffenden Anlagenkomponente begeben muss.

Hierbei kann es zweckmäßig sein, zumindest einer der Koppelgegenstellen ein materielles Koppelmittel funktionsspezifisch zugeordnet ist, sodass die entsprechende Koppelgegenstelle und das entsprechende Koppelmittel ein Funktionspaar ausbilden.

Eine funktionale Abstimmung einer jeweiligen Koppelgegenstelle auf die entsprechende Anlagenkomponente kann hierbei bedarfsabhängig auf mannigfaltige Art und Weise realisiert sein. Dies kann zum Beispiel Zugänglichkeit zur Koppelgegenstelle oder die Positionierung der Koppelgegenstelle in der Nähe von ortsfest an der Anlagenkomponente angeordneten Manipulationselementen, Eingabeelementen oder Sicherheitseinrichtungen für die entsprechende Anlagenkomponente betreffen. Im Wesentlichen richtet sich die Art einer solchen funktionalen Abstimmung zwischen Koppelgegenstelle und Anlagenkomponente nach dem jeweiligen Typ, Funktionsweise und/oder Ausgestaltungsform der jeweiligen Anlagenkomponente bzw. Maschine.

Beispielsweise kann auch vorgesehen sein, dass die maximale Längserstreckung eines jeweiligen Koppelmittels hinsichtlich einer maximal erforderlichen oder maximal zulässigen Distanzierung der Handbedieneinheit von der Koppelgegenstelle angepasst ist.

Hierdurch ist eine Lösung bereitgestellt, welche berücksichtigt, dass grundsätzlich bei manchen Komponenten einer Anlage vor allem hinsichtlich einer sicheren Bedienung durchaus kürzere Bewegungsreichweiten von Vorteil sein können. Bei anderen Komponenten derselben Anlage können wiederum größere Bewegungsreichweiten für eine Bedienperson zweckmäßig sein.

Bei einer weiteren, vorteilhaften Ausführungsform kann vorgesehen sein, dass zumindest ein Verbindungselement wenigstens eine Kennung aufweist, welche Identifikationsdaten über die der jeweiligen Koppelgegenstelle zugeordneten Anlagenkomponente, Maschine oder Maschinenkomponente umfasst oder repräsentiert, und dass die zumindest eine Kopplungszustandsüberwachungsvorrichtung oder eine eigenständige Lesevorrichtung zur Erfassung der Kennung und zur Übermittlung der Kennung oder der Identifikationsdaten an die zumindest eine Steuerungsvorrichtung ausgebildet ist, und dass die Steuerungsvorrichtung auf Basis der übermittelten Kennung oder Identifikationsdaten zur signal- und/oder datentechnischen Zuordnung und/oder Freigabe von beaufsichtigungskritischen Steuerungskommandos betreffend die jeweils identifizierte Anlagenkomponente, Maschine oder Maschinenkomponente ausgebildet ist.

Vorteilhaft ist hierbei, dass für das Steuerungssystem bzw. eine Steuerungsvorrichtung des Steuerungssystems eine sichere und verwechslungsfreie Zuordnung einer Handbedieneinheit zu einer bestimmten Koppelgegenstelle bzw. Anlagenkomponente bereitgestellt ist. Dadurch kann die Bedienungssicherheit und -zuverlässigkeit nochmalig weiter verbessert werden, da von dem Steuerungssystem bzw. von der zumindest einen Steuerungsvorrichtung des Steuerungssystems eine automatisierte Erkennung einer Anlagenkomponente bzw. Koppelgegenstelle via die zumindest eine Kopplungszustandsüberwachungsvorrichtung oder eine eigenständige Lesevorrichtung durchgeführt werden kann. Diese Merkmale erlauben im Besonderen eine sichere und verwechslungsfreie Zuordnung von drahtlos übertragenen Steuerungskommandos, sodass im Falle eines Auslösens eines solchen Steuerungskommandos via die Handbedieneinheit, von dem Steuerungssystem eine sichere Zuordnung des Kommandos zur betreffenden Anlagenkomponente, im Sinne einer Adressierung vorgenommen werden kann. Des Weiteren kann das Steuerungssystem auf Basis der zur Freigabe von für die jeweils betreffende Anlagenkomponente gültige und durchführbare Steuerungskommandos bzw. entsprechende beaufsichtigungsrelevante Steuerungskommandos, sowie zur Sperre von für die jeweilige Anlagenkomponente nicht gültigen bzw. undurchführbaren Steuerungskommandos ausgebildet sein. Das Steuerungssystem kann hierbei zur fortlaufenden Überwachung der Kennung bzw. der Anwesenheit der Kennung via zumindest eine Kopplungszustandsüberwachungsvorrichtung oder die eigenständige Lesevorrichtung ausgebildet sein. Bei einer Ausführungsvariante der Koppelvorrichtung als elektrische Steckverbindung können Kennungen beispielsweise durch unterschiedlich kodierte, als Stecker ausgebildete Verbindungselemente ausgebildet sein.

In diesem Zusammenhang kann es vorteilhaft sein, wenn die zumindest eine Kopplungszustandsüberwachungsvorrichtung oder eine eigenständige Lesevorrichtung durch eine berührungslos erfassende Lesevorrichtung gebildet ist, und das jeweilige Verbindungselement eine mittels der Lesevorrichtung lesbare Kennung aufweist.

Dies ermöglicht eine einfach umzusetzende, wirtschaftlich zweckmäßige und dennoch effiziente Erfassung einer Kennung, welche insbesondere bei großen Anlagen mit einer Vielzahl an Anlagenkomponenten bzw. Maschinen vorteilhaft ist. Die berührungslos erfassbare Kennung kann dabei beispielsweise durch einen RFID-Tag oder Dergleichen an einem Koppelmittel gebildet sein. Dadurch ist eine Möglichkeit für das Steuerungssystem bereitgestellt, via die Koppelzustandsüberwachungsvorrichtung oder die eigenständige Lesevorrichtung komplexe aber dennoch verwechslungssichere Kennungen berührungslos zu erfassen bzw. einzulesen. Der Vorteil der berührungslosen Erfassbarkeit einer Kennung kommt beispielsweise in explosionsgeschützten Betriebsumgebungen dadurch zum Tragen, dass alle Gehäuse, insbesondere ein Gehäuse der Handbedieneinheit vollkommen verschlossen und gasdicht ausgeführt werden können, und keinerlei elektrische Kontakte nach außerhalb eines Gehäuses geführt werden müssen.

In weiterer Folge kann es zweckmäßig sein, wenn die Lesevorrichtung durch eine optisch erfassende Sensorvorrichtung gebildet ist, und das jeweilige Verbindungselement eine mittels der optischen Sensorvorrichtung lesbare Kennung aufweist.

Dies stellt einen besonders zuverlässige und störungsunempfindliche Ausgestaltungsvariante dar. Die Lesevorrichtung bzw. die Koppelzustandsüberwachungsvorrichtung kann in diesem Falle beispielsweise als Barcode-Reader, oder eine bildgebende Sensorvorrichtung bzw. optische Kamera gebildet sein.

Außerdem kann vorgesehen sein, dass das Steuerungssystem auf Basis der übermittelten Kennung oder Identifikationsdaten zur automatischen oder bedarfsweise aufrufbaren Ausgabe von Informationen betreffend die der entsprechenden Koppelgegenstelle zugeordneten Anlagenkomponente, Maschine oder Maschinenkomponente an der Handbedieneinheit ausgebildet ist.

Hierdurch ist einerseits eine automatisierte Auswahl bzw. Anpassung der auf der Handbedieneinheit dargestellten Informationen bzw. einer möglichst optimierten Darstellungsform der Informationen an der Handbedieneinheit bereitgestellt. Außerdem kann hierdurch einer Bedienperson eine zusätzliche Möglichkeit zur manuellen, beispielsweise visuellen Kontrolle bzw. Überprüfung einer ordnungsgemäßen bzw. korrekten Koppelung mit einer jeweils gewünschten Koppelgegenstelle zur Verfügung gestellt werden. Eine einfache beispielhafte Möglichkeit hierzu wäre eine optische Anzeige an der Handbedieneinheit, welche der Bedienperson Informationen über die jeweilige Koppelgegenstelle bzw. die einer Koppelgegenstelle zugeordnete Anlagenkomponente bzw. Maschine anzeigt.

Bei einer weiteren Ausführungsform kann vorgesehen sein, dass das Koppelmittel durch ein elektrisch leitendes Kabel gebildet ist, und die wenigstens eine Koppelvorrichtung durch eine elektrische Steckverbindung gebildet ist.

Durch diese Ausgestaltungsform sind ein Koppelmittel und eine Koppelvorrichtung bereitgestellt, welche eine zusätzlich zur physischen Bindung zwischen der Handbedieneinheit und einer Koppelgegenstelle eine durchgängige elektrische Leitungsverbindung zwischen der Handbedieneinheit und einer Koppelgegenstelle ermöglichen.

In weiterer Folge kann vorgesehen sein, dass das Steuerungssystem bei Vorliegen einer physischen Bindung zwischen der Handbedieneinheit und der wenigstens einen Koppelgegenstelle via das Koppelmittel zur elektrischen Stromversorgung der Handbedieneinheit und/oder zum Aufladen der internen Stromversorgungseinheit der Handbedieneinheit ausgebildet ist.

Hierdurch kann eine an einer Koppelgegenstelle angekoppelte Handbedieneinheit zumindest während eines hergestellten Kopplungszustandes mit Strom versorgt werden. Auf diese Weise sind etwaig auftretende Probleme aufgrund leerer, interner Stromversorgungseinheiten der Handbedieneinheit vermeidbar. Die zumindest solange eine Handbedieneinheit beispielsweise zum Auslösen von beaufsichtigungsrelevanten Steuerungskommandos mit einer Koppelgegenstelle gekoppelt bzw. verbunden ist. Gegebenenfalls kann so auch eine langfristige Benutzung einer Handbedieneinheit erfolgen, ohne dass die Handbedieneinheit zwischenzeitlich an einer separaten Ladestation oder Dergleichen aufgeladen werden muss.

Es kann aber auch zweckmäßig sein, wenn das Koppelmittel wenigstens eine Signalübertragungsleitung umfasst.

Dadurch ist auch eine kabelgebundene Übertragung von Steuerungskommandos von der Handbedieneinheit an die Steuerungsvorrichtung(en) der Anlage bereitgestellt. Die wenigstens eine Signalübertragungsleitung kann beispielsweise durch einen Lichtleiter oder durch einen elektrischen Leiter gebildet sein. Auf diese Weise können etwaige Störungen bei drahtloser Übertragung bzw. Bereitstellung von Steuerungskommandos vermieden werden, wie zum Beispiel Störungen aufgrund elektromagnetischer Störfelder oder Dergleichen.

Bei einer weiteren, zweckmäßigen Weiterbildung kann auch vorgesehen sein, dass die zumindest eine Kopplungszustandsüberwachungsvorrichtung zur fortlaufenden Überwachung einer elektrisch leitenden Verbindung und/oder zur fortlaufenden Überwachung einer Signalverbindung zwischen der Handbedieneinheit und der wenigstens einen Koppelgegenstelle ausgebildet ist.

Durch diese Ausgestaltungsform kann die Steuerungssicherheit nochmalig weiter verbessert werden, insbesondere können auf diese Weise auch Manipulationsversuche am Steuerungssystem unterbunden werden, etwa Versuche, die Reichweitenbegrenzung durch das Koppelmittel zu umgehen. Durch die entsprechende Ausgestaltung der Kopplungszustandsüberwachungsvorrichtung können grundsätzlich unbeabsichtigte oder auch vorsätzlich herbeigeführte Unterbrechungen bzw. Beschädigungen am Koppelmittel zuverlässig detektiert werden. Diese Überwachungsmöglichkeit stellt somit eine weitere bzw. zusätzliche Verbesserung zu einer reinen Überwachung des Kopplungszustandes der Koppelvorrichtung dar. Zum Beispiel kann eine Beschädigung eines am Boden verlaufenden Koppelmittels, etwa durch ein Fahrzeug oder heruntergefallene Gegenstände unmittelbar festgestellt werden. Es ist mittels einer derart ausgestalteten Kopplungszustandsüberwachungsvorrichtung bzw. Bindungszustandsüberwachungsvorrichtung aber auch möglich, etwaige Manipulationsversuche durch Durchtrennen des Koppelmittels wirksam zu detektieren, und kann das Steuerungssystem in der Folge wiederum das Auslösen von beaufsichtigungsrelevanten Steuerungskommandos sperren bzw. unterbinden.

Vorteilhaft kann auch eine Ausgestaltungsvariante des Steuerungssystems sein, bei welcher es zur Übertragung einer datentechnischen Kennung via die wenigstens eine Signalübertragungsleitung an die Handbedieneinheit ausgebildet ist, welche datentechnische Kennung Identifikationsdaten über die der jeweiligen Koppelgegenstelle zugeordneten Anlagenkomponente, Maschine oder Maschinenkomponente umfasst, und dass die Handbedieneinheit auf Basis der übermittelten, datentechnischen Kennung oder Identifikationsdaten zur signal- und/oder datentechnischen Zuordnung und/oder Freigabe von beaufsichtigungsrelevanten Steuerungskommandos betreffend die jeweils identifizierte Anlagenkomponente, Maschine oder Maschinenkomponente ausgebildet ist.

Dadurch kann beispielsweise eine zur Steuerung einer bestimmten Anlagenkomponente ausgebildete Steuerungsvorrichtung unmittelbar eine datentechnische Kennung über eine entsprechende Koppelgegenstelle an die Handbedieneinheit übermitteln, woraufhin beispielsweise eine Steuerungsvorrichtung der Handbedieneinheit zur Freischaltung von beaufsichtigungsrelevanten Steuerungskommandos für diese Anlagenkomponente bzw. Koppelgegenstelle ausgebildet sein kann. Hierdurch ist auch eine möglichst universelle Einsetzbarkeit der Handbedieneinheit und gleichzeitig eine möglichst hohe Bedienungssicherheit und -zuverlässigkeit bereitgestellt. Außerdem ist hierdurch ein über den bloßen Ankoppelvorgang hinausgehender zusätzlicher Auswahlschritt seitens des Benutzers erübrigt, und damit auch eine fehlerhafte Zuordnung etwa zufolge einer fehlerhaften Benutzereingabe beziehungsweise zufolge eines Irrtums der Bedienperson, beispielsweise bei einer Auswahl einer von mehreren Maschinen zuverlässig unterbunden.

In diesem Zusammenhang kann vorgesehen sein, dass die Handbedieneinheit auf Basis der übermittelten, datentechnischen Kennung oder Identifikationsdaten zur automatischen oder bedarfsweise aufrufbaren Ausgabe von Informationen betreffend die der entsprechenden Koppelgegenstelle zugeordneten Anlagenkomponenten, Maschinen oder Maschinenkomponenten an der Handbedieneinheit ausgebildet ist.

Auf diese Weise kann eine optimierte Konfiguration der Ausgabe- bzw. Anzeigeelemente der Handbedieneinheit hinsichtlich einer jeweiligen Koppelgegenstelle automatisiert vorgenommen bzw. ausgeführt werden.

Bei einer Weiterbildung des Steuerungssystems kann aber auch vorgesehen sein, dass es bei Vorliegen einer physischen und signaltechnischen Verbindung über das zumindest eine Koppelmittel zwischen der Handbedieneinheit und einer Koppelgegenstelle zur Übertragung der beaufsichtigungsrelevanten Steuerungskommandos von der Handbedieneinheit an die zumindest eine Steuerungsvorrichtung via das zumindest eine Koppelmittel und die Koppelgegenstelle ausgebildet ist.

Bei dieser bevorzugten Ausführungsform können die beaufsichtigungsrelevanten Steuerungskommandos über einen, im Vergleich zu einer drahtlosen Übertragung zuverlässigeren bzw. übertragungssicheren Signalpfad übertragen bzw. für die zumindest eine Steuerungsvorrichtung bereitgestellt werden. Insbesondere kann es bei drahtloser Übertragung von Steuerungskommandos aufgrund von Störungen zu Verzögerungen bei der Übertragung kommen. Solche Übertragungs- bzw. Bereitstellungsverzögerungen können bei der kabelgebundenen Übertragung via das Koppelmittel und die Koppelgegenstelle hintangehalten werden. Dies bringt im Besonderen Vorteile bei einer etwaigen Handbedienung von Anlagenkomponenten unter Echtzeitbedingungen, wie beispielsweise beim sogenannten Teachen von Robotern, oder bei einem Einrichten von Werkzeugmaschinen. Bei solchen manuellen Handbedienungshandlungen bzw. -vorgängen unter Echtzeitbedingungen ist eine unmittelbare Reaktion auf ein abgesetztes bzw. ausgelöstes Steuerungskommando auf jeden Fall wünschenswert, mitunter sogar erforderlich. Dies betrifft beispielsweise Verfahr- oder Verstellbewegungen einer Maschinenkomponente die genau zeitgleich während der Betätigung eines Bedienelementes erfolgen sollen. Des Weiteren kann durch die diese Ausgestaltungsform des Steuerungssystems auf technisch einfache und sichere Weise sichergestellt werden, dass die beaufsichtigungsrelevanten Steuerungskommandos verwechslungssicher zur Steuerung der der entsprechenden Koppelgegenstelle zugeordneten Anlagenkomponente, Maschine bzw. Maschinenkomponente umgesetzt werden. Dies insbesondere deshalb, da durch das Koppelmittel eine eindeutige, signaltechnische Punkt-zu-Punkt Verbindung zur Übertragung der beaufsichtigungsrelevanten Steuerungskommandos zwischen der Handbedieneinheit und der entsprechenden Koppelgegenstelle implementiert ist.

Hierbei kann es zweckmäßig sein, wenn das Steuerungssystem zur Übertragung der Steuerkommandos unter Verwendung eines echtzeitfähigen Busprotokolls und/oder unter Verwendung eines sicherheitsgerichteten Busprotokolls ausgebildet ist.

Dadurch kann die Übertragungs- bzw. Bereitstellungseffizienz bzw. -zuverlässigkeit über das Koppelmittel nochmalig weiter verbessert werden. Zusätzlich kann auf diese Weise die Anzahl der erforderlichen Signalleitungen in dem Koppelmittel möglichst reduziert werden.

Bei einer bevorzugten Weiterbildung kann vorgesehen sein, dass die Handbedieneinheit zumindest ein manuell auslösbares Sicherheitsschaltelement aufweist, und dass das Steuerungssystem bei Vorliegen einer physischen und signaltechnischen Verbindung anhand eines Koppelmittels zwischen der Handbedieneinheit und der Koppelgegenstelle und bei manueller Auslösung des Sicherheitsschaltelements zur Übertragung eines Sicherheitssignals via das Koppelmittel und die Koppelgegenstelle ausgehend von der Handbedieneinheit an die zumindest eine Steuerungsvorrichtung oder an eine separat ausgestaltete Sicherheitsvorrichtung ausgebildet ist.

Durch diese Ausgestaltungsform des Steuerungssystems ist eine Anbindung von für die Sicherheit von Personen wesentlichen Sicherheitsschaltelementen auf besonders zuverlässige und störungssichere Weise bereitgestellt. Außerdem sind einer Bedienperson durch das oder die Sicherheitsschaltelement(e) an der Handbedieneinheit wirksame Mittel zur Verfügung gestellt, mittels welche die Bedienperson schnell und wirksam auf etwaig auftretende Gefahrensituationen reagieren kann. Etwaige, aufwendige und technisch anspruchsvolle Lösungen zur drahtlosen Übertragung bzw. Bereitstellung der Signale der Sicherheitsschaltelemente, beispielsweise an die zumindest eine Steuerungsvorrichtung via die drahtlose Kommunikationsverbindung können hierdurch erübrigt werden. Zum Empfangen der Sicherheitssignale kann insbesondere auch zumindest eine sogenannte Sicherheitssteuerung des Steuerungssystems vorgesehen sein, welche den jeweiligen Sicherheitsnormen entsprechend ausgeführt sein kann. Durch die eindeutige und verwechslungssichere Punkt-zu-Punkt Verbindung zwischen der Handbedieneinheit und der Koppelgegenstelle via das Koppelmittel kann außerdem auch sichergestellt werden, dass das oder die Sicherheitsschaltelement(e) der Handbedieneinheit bei Betätigung durch die Bedienperson auf die richtige bzw. beabsichtigte Anlagenkomponente bzw. Maschine bzw. Maschinenkomponente einwirken. Im Falle von sogenannten Not-Aus, Not-Stopp, oder Not-Halt-Schaltelementen kann die signaltechnische Verbindung anhand eines Koppelmittels zwischen der Handbedieneinheit und der Koppelgegenstelle insbesondere durch einen Sicherheitsschaltkreis ausgeführt sein, welcher Sicherheitsschaltkreis zweikreisig redundant ausgebildet sein kann.

In weitere Folge kann hierbei auch vorgesehen sein, dass die zumindest eine Kopplungszustandsüberwachungsvorrichtung zur fortlaufenden Überwachung der ordnungsgemäßen Signalverbindung zwischen dem Sicherheitsschaltelement der Handbedieneinheit und der zumindest einen Steuerungsvorrichtung oder zwischen dem Sicherheitsschaltelement der Handbedieneinheit und der separat ausgestaltete Sicherheitsvorrichtung ausgebildet ist.

Hierdurch eine nochmalige Verbesserung der Betriebs- und insbesondere der Personensicherheit erreicht werden, da durch das Steuerungssystem sichergestellt werden kann, dass die beaufsichtigungsrelevanten Steuerungskommandos nur dann freigeschaltet bzw. freigegeben sind, wenn die Sicherheitsschaltelemente der Handbedieneinheit via das Koppelmittel signaltechnisch mit der zumindest einen Steuerungsvorrichtung bzw. der separat ausgestalteten Sicherheitsvorrichtung verbunden sind, und damit funktionswirksam sind.

Hierbei kann vorgesehen sein, dass die Kopplungszustandsüberwachungsvorrichtung wenigstens eine Sicherheitsschaltung umfasst, welche zur periodischen Kurzschluss- und Querschlussprüfung der ordnungsgemäßen Signalverbindung zwischen dem Sicherheitsschaltelement der Handbedieneinheit und der zumindest einen Steuerungsvorrichtung oder zwischen dem Sicherheitsschaltelement der Handbedieneinheit und der separat ausgestaltete Sicherheitsvorrichtung ausgebildet ist.

Auf diese Weise ist eine wirkungsvolle Ausgestaltungsvariante einer Kopplungszustandsüberwachungsvorrichtung bereitgestellt. Eine derart ausgebildete Kopplungszustandsüberwachungsvorrichtung kann hierbei beispielsweise eine Sicherheitsschaltung an der Koppelgegenstelle umfassen, welche zur Durchführung der periodischen Kurzschluss- und Querschlussprüfung ausgebildet ist. Die Kopplungszustandsüberwachungsvorrichtung kann außerdem eine weitere Sicherheitsschaltung an der Handbedieneinheit bzw. an der Koppelvorrichtung umfassen, welche zur Überprüfung bzw. Erfassung der periodisch von der Sicherheitsschaltung an der Koppelgegenstelle durchgeführten Kurzschluss- und Querschlussprüfung ausgebildet ist. Das Steuerungssystem bzw. eine Steuerungsvorrichtung oder eine Sicherheitsvorrichtung des Steuerungssystems kann wiederum bei einem negativen Prüfergebnis einer Kurzschluss- und Querschlussprüfung zur Sperre der beaufsichtigungsrelevanten Steuerungskommandos ausgebildet sein.

Zweckmäßig kann aber auch eine alternative Weiterbildung sein, bei welcher das zumindest eine Koppelmittel durch ein signaltechnisch inaktives Mittel, insbesondere durch eine Schnur, eine Leine, ein Band oder ein Seil gebildet ist.

Durch eine derartige Ausgestaltungsform des Koppelmittels kann mit minimalen technischen Aufwand dennoch eine wesentliche Verbesserung der Betriebs- und Bedienungssicherheit des Steuerungssystems bereitgestellt werden. Insbesondere kann das Koppelmittel auf diese Weise sehr leicht, hochflexibel und gleichzeitig robust ausgeführt werden, was besonders bei länger dauernden Bedienvorgängen die Ergonomie gegenüber einer Kabelverbindung deutlich verbessert.

Es kann bei einer weiteren Ausführungsform auch vorgesehen sein, dass die wenigstens eine Koppelgegenstelle eine Aufnahmevorrichtung für das Koppelmittel umfasst.

Auf diese Weise kann eine effektive und platzsparende Bereitstellung für das Koppelmittel an der Koppelgegenstelle bereitgestellt werden. Des Weiteren ist hierdurch eine nochmalige Verbesserung hinsichtlich der Verwechslungssicherheit der Zuordnung eines Koppelmittels zu einer Koppelgegenstelle erzielbar. Durch die Aufnahmevorrichtung ist außerdem ein kontrolliertes Verbringen bzw. Aufbewahren des Koppelmittels an der Koppelgegenstelle möglich, wodurch Beschädigungen, beispielsweise an ungeordnet herumliegenden Koppelmitteln hintangehalten werden können.

Bei einer solchen Ausgestaltungsform kann schließlich auch vorgesehen sein, dass die Aufnahmevorrichtung durch eine Wickelvorrichtung gebildet ist, welche einen Federspeicherantrieb oder einen elektromotorischen Antrieb zum Aufwickeln des Koppelmittels aufweist. Hierdurch ist ein besonders kontrolliertes und effizientes Verbringen eines Koppelmittels ermöglicht. Außerdem kann ein Aufwickelvorgang für ein Koppelmittel kraftunterstützt erfolgen, und ist dadurch für eine Bedienperson wesentlich erleichtert.

Zum besseren Verständnis der Erfindung wird diese anhand der nachfolgenden Figuren näher erläutert.

Es zeigen jeweils in stark vereinfachter, schematischer Darstellung:
- Fig. 1: ein Ausführungsbeispiel eines Steuerungssystems sowie Komponenten einer mit dem Steuerungssystem elektrisch gesteuerten Anlage;
- Fig. 2: ausschnittsweise ein weiteres Ausführungsbeispiel für Komponenten des Steuerungssystems;
- Fig. 3: ausschnittsweise ein weiteres Ausführungsbeispiel für Komponenten des Steuerungssystems;
- Fig. 4: ausschnittsweise ein weiteres Ausführungsbeispiel für Komponenten des Steuerungssystems;
- Fig. 5: ausschnittsweise ein weiteres Ausführungsbeispiel für Komponenten des Steuerungssystems.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

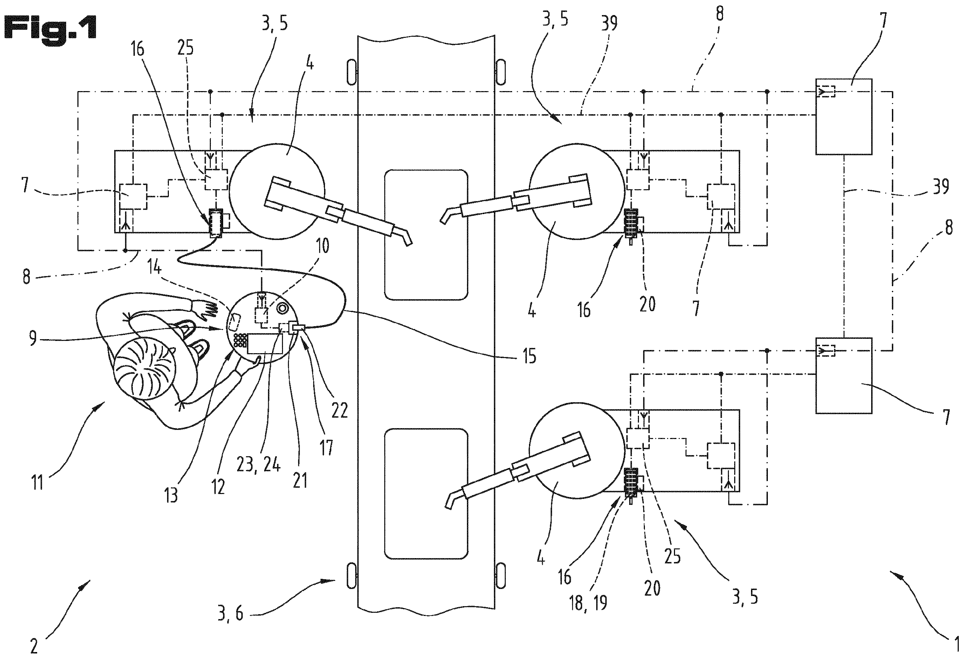

In der Fig. 1 sind Komponenten eines Steuerungssystems 1 sowie einer mit dem Steuerungssystem 1 gesteuerten Anlage 2 veranschaulicht. Die ausschnittsweise dargestellte technische Anlage 2 umfasst mehrere Anlagenkomponenten 3, welche in dem Beispiel gemäß der Fig. 1 durch Industrieroboter 4 umfassende Bearbeitungsstationen 5 gebildet sein können. Im Prinzip kann eine technische Anlage 2 beliebige, weitere Anlagenkomponenten 3 umfassen, um technische Prozesse, beispielsweise Fertigungsprozesse, chemische Verfahren und Dergleichen zumindest teilweise automatisiert abwickeln bzw. ausführen zu können. Zum Beispiel umfasst die in dem Ausführungsbeispiel der Fig. 1 dargestellte Anlage 2 eine Transportvorrichtung 6 zum Transport von Gegenständen, Werkstücken, Halbzeugen und Dergleichen zwischen den Bearbeitungsstationen 5 bzw. zur Bereitstellung von Gegenständen für die Bearbeitungsstationen 5.

Wie in der Fig. 1 dargestellt ist, weist das Steuerungssystem 1 zumindest eine elektronische Steuerungsvorrichtung 7 auf. Wie grundsätzlich bekannt und heutzutage üblich ist, kann die zumindest eine Steuerungsvorrichtung 7 auch Bestandteil eines Steuerungsnetzwerkes mit mehreren dezentral angeordneten Steuerungsvorrichtungen 7 sein, wie dies auch schematische in der Fig. 1 angedeutet ist. Die einzelnen Steuerungsvorrichtungen 7 können hierbei zur Ausführung von bestimmten Aufgaben, beispielsweise zur Überwachung und Steuerung der Anlage 1 bzw. zur Überwachung und Steuerung bestimmten Anlagenkomponenten 3 ausgebildet bzw. programmiert sein, wobei die Steuerungsarchitektur zur Überwachung und Steuerung der Anlage 2 im Prinzip beliebige Topologien aufweisen kann.

Bedarfsabhängig können die einzelnen Steuerungsvorrichtungen 7 hierfür zur kabelgebundenen und/oder kabellosen Kommunikation über drahtlose Kommunikationsverbindungen 8 untereinander ausgebildet sein, wie dies auch schematisch in der Fig. 1 angedeutet ist. Eine solche drahtlose Kommunikationsverbindung 8 kann beispielsweise durch eine Verbindung nach dem WLAN- oder Bluethooth-Standard gebildet sein.

Das Steuerungssystem 1 umfasst des Weiteren wenigstens eine tragbare, mobile Handbedieneinheit 9. Die wenigstens eine Handbedieneinheit 9 bzw. eine Steuerungsvorrichtung 10 der Handbedieneinheit 9 kann wiederum signal- bzw. datentechnisch über eine drahtlose Kommunikationsverbindung 8 mit einer oder mehreren der Steuerungsvorrichtungen 7 des Steuerungssystems 1 verbunden sein. Die wenigstens eine Handbedieneinheit 9 ist zur Benutzung durch eine Bedienperson 11 vorgesehen bzw. ausgebildet, wobei grundsätzlich ein Signalaustausch bzw. Datenaustausch zwischen der Handbedieneinheit 9 und einer Steuerungsvorrichtung 7 über die drahtlose Kommunikationsverbindung 8 ermöglicht ist. Zwischen den einzelnen Steuerungsvorrichtungen 7, 10 können zusätzlich selbstverständlich auch kabelgebundene Kommunikationsverbindungen 39 vorgesehen sein.

Grundsätzlich können die Steuerungsvorrichtung(en) 7 funktionale Steuerungsvorrichtung(en) 7 einer Anlage bzw. Anlagenkomponente 3 sein, welche zum Beispiel zur Umsetzung von automatisiert übermittelten Steuerungskommandos, oder von an der Handbedieneinheit 9 eingegebenen bzw. ausgelösten Steuerungskommandos ausgebildet sind. Solche Steuerungsvorrichtungen 7 können beispielsweise zur Ansteuerungen von Aktoren oder Antrieben für bestimmte Anlagenkomponenten 3 ausgebildet sein. Es können jedoch selbstverständlich weitere Steuerungsvorrichtungen 7 vorgesehen sein, auch zum Beispiel übergeordnete Steuerungsvorrichtungen 7, welche zum Beispiel logistische oder Energiebereitstellungsabläufe oder Übertragungsabläufe zwischen einzelnen Anlagenkomponenten 3 automatisiert oder teilautomatisiert abwickeln. Bevorzugt ist die zumindest eine Handbedieneinheit 9 mit wenigstens einer funktionalen Steuerungsvorrichtung 7 des Steuerungssystems 1 signalübertragungstechnisch bzw. datentechnisch kommunikationsverbunden.

Im Rahmen dieses Dokumentes wird grundsätzlich unter einer Übertragung von Signalen auch eine Bereitstellung von Signalen verstanden.

Zur Anzeige von Informationen weist die wenigstens eine Handbedieneinheit 9 wenigstens ein Ausgabeelement 12 auf, zur Eingabe von Einstellungen und/oder zum manuellen Auslösen von Steuerungskommandos kann die Handbedieneinheit Eingabeelemente 13 aufweisen. Die jeweilige genaue Ausgestaltungsform der Ausgabeelemente 12 und der Eingabeelemente 13 der wenigstens einen Handbedieneinheit 9 kann dabei den jeweiligen Anforderungen und Bedürfnissen, bzw. dem jeweiligen Anwendungszweck angepasst sein. Zum Zwecke einer zeitweiligen, elektrischen Stromversorgung weist die Handbedieneinheit 9 außerdem eine interne Stromversorgungseinheit 14 auf.

Bei dem Steuerungssystem 1 ist zumindest ein formflexibles, materielles Koppelmittel 15 mit einer begrenzten, maximalen Längserstreckung vorgesehen. Wie in der Fig. 1 dargestellt ist, umfasst das Steuerungssystem 1 weiters wenigstens eine räumlich feststehend angeordnete, maschinenseitige Koppelgegenstelle 16, wobei das Steuerungssystem 1 beim Ausführungsbeispiel gemäß der Fig. 1 mehrere voneinander distanzierte maschinenseitige Koppelgegenstellen 16 umfasst. Den Koppelgegenstellen 16 sind hierbei jeweils elektrisch steuerbaren Anlagenkomponenten 3 bzw. elektrisch steuerbaren Maschinen bzw. elektrisch steuerbare Maschinenkomponenten ortsnah zugeordnet. Bei dem in der Fig. 1 dargestellten Ausführungsbeispiel ist jeder Bearbeitungsstation 5 eine Koppelgegenstelle 16 zugeordnet.

Außerdem ist zumindest eine werkzeuglos betätigbare Koppelvorrichtung 17 ausgebildet, via welche Koppelvorrichtung 17 eine Bedienperson 11 wahlweise bzw. bedarfsweise eine physische Bindung zwischen der Handbedieneinheit 9 und wenigstens einer räumlich feststehend angeordneten, maschinenseitigen Koppelgegenstelle 16 herstellen kann, bzw. eine hergestellte, physische Bindung wieder lösen kann. Im bevorzugten Ausführungsbeispiel gemäß der Fig. 1 ist die Koppelvorrichtung 17 an der Handbedieneinheit 9 angeordnet, und das Koppelmittel 15 maschinenseitig mit der Koppelgegenstelle 16 fix verbunden. Alternativ könnte auch an der maschinenseitigen Koppelgegenstelle 16 eine weitere Koppelvorrichtung zur Ankoppelung des Koppelmittels 15 an der Koppelgegenstelle 16 grundsätzlich vorgesehen sein.

Insbesondere bei fix an eine Koppelgegenstelle 16 gebundenen Koppelmittel 15 kann vorgesehen sein, dass den Koppelgegenstellen 16 jeweils ein materielles Koppelmittel 15 funktionsspezifisch zugeordnet ist, sodass die entsprechende Koppelgegenstelle 16 und das entsprechende Koppelmittel 15 ein Funktionspaar ausbilden, wie dies auch anhand des in der Fig. 1 dargestellten Ausführungsbeispiels ersichtlich ist. Hierbei kann ein jeweiliges Koppelmittel entsprechend den Erfordernissen für eine jeweilige Koppelgegenstelle 16 ausgestaltet sein. Beispiele für solche funktionalen Abstimmungen bzw. Ausgestaltungen eines Koppelmittels 15 und einer Koppelgegenstelle 16 werden nachfolgend noch anhand von Beispielen näher erläutert.

Je nach den Erfordernissen einer jeweiligen Koppelgegenstelle 16 kann ein Koppelmittel 15 in einer einfachen Ausgestaltungsform beispielsweise durch ein signaltechnisch inaktives Mittel, insbesondere durch eine Schnur, eine Leine, ein Band oder ein Seil gebildet sein. Wie in der Fig. 1 schematisch angedeutet ist, ist bei hergestellten Kopplungszustand der Koppelvorrichtung 17 durch das Koppelmittel 15 die maximale Distanz innerhalb welcher die Bedienperson 11 die Handbedieneinheit 9 bewegen kann bzw. von der Koppelgegenstelle 16 entfernen kann, durch die Längserstreckung des Koppelmittels 15 begrenzt. Die maximale Längserstreckung eines Koppelmittels 15 kann grundsätzlich frei gewählt werden, und kann dabei sinnvollerweise bedarfsabhängig nach einer jeweils für eine bestimmte Koppelgegenstelle 16 bzw. Anlagenkomponente 3 maximal erforderlichen oder maximal zulässigen Distanzierung der Handbedieneinheit 9 von der Koppelgegenstelle 16 angepasst werden.

Zweckmäßig ist es hierbei, wenn einerseits die maximale Entfernungsdistanz für die Handbedieneinheit 9 von einer jeweiligen Koppelgegenstelle 16 durch das Koppelmittel 15 bei hergestelltem Kopplungszustand der Koppelvorrichtung 17 soweit begrenzt ist, dass die Bedienperson 11 bei der Bedienung der jeweiligen Anlagenkomponente 3 mit der Handbedieneinheit 9 die entsprechende Anlagenkomponente 3 sensorisch erfassen, insbesondere visuell beaufsichtigen kann. Andererseits soll für die Bedienperson 11 auch bei einem hergestellten Kopplungszustand der Koppelvorrichtung 17 ausreichend Bewegungsfreiheit gegeben sein, um beispielsweise mit der Handbedieneinheit 9 eine günstige Beaufsichtigungsposition einnehmen zu können. Ein Koppelmittel 15 kann hierbei zum Beispiel eine maximale Längserstreckung ausgewählt aus einem Bereich zwischen 2 Meter und 25 Meter aufweisen. Bevorzugt weist ein Koppelmittel 15 eine maximale Längserstreckung zwischen 5 Meter und 15 Meter auf.

Zur Aufbewahrung von insbesondere fix mit einer jeweiligen Koppelgegenstelle 16 verbundenen Koppelmitteln 15 der Fig. 1 kann eine jeweilige Koppelgegenstelle hierzu eine Aufbewahrungs- oder Haltevorrichtung 18 für das Koppelmittel 15 umfassen, in welcher Haltevorrichtung 18 ein Koppelmittel 15 kontrolliert verbracht und aufbewahrt werden kann. Zum Beispiel kann vorgesehen sein, dass die Aufbewahrungs- oder Haltevorrichtung 18 durch eine Wickelvorrichtung 19 gebildet ist. Eine solche Wickelvorrichtung 19 kann hierbei beispielsweise manuell betätigbar sein. Bevorzugt wird eine Wickelvorrichtung 19 ausgebildet bzw. verwendet, welche einen Federspeicherantrieb oder einen elektromotorischen Antrieb 20 zum Aufwickeln des Koppelmittels 15 aufweist.

Die werkzeuglos betätigbare Koppelvorrichtung 17, via welche das Koppelmittel 15 zur Herstellung einer physischen Bindung zwischen der Handbedieneinheit 9 und einer Koppelgegenstelle 16 angekoppelt werden kann, kann grundsätzlich auf verschiedenste Art und Weise ausgestaltet sein. Zum Beispiel kann eine Koppelvorrichtung durch einen Permanentmagneten an dem Koppelmittel und einem Permanentmagneten an der Handbedieneinheit gebildet sein, welche Permanentmagneten zur gegenseitigen Anziehung ausgebildet sind. Bei dem in der Fig. 1 dargestellten Ausführungsbeispiel ist die zumindest eine Koppelvorrichtung 17 durch ein an der Handbedieneinheit 9 ausgebildetes Anschlusselement 21, sowie durch ein an einem Längsende des zumindest einen Koppelmittels 15 angeordnetes und zum werkzeuglos ausführbaren, form- und/oder kraftschlüssigen Verbinden mit dem Anschlusselement 21 vorgesehenes, korrespondierendes Verbindungselement 22 gebildet. Hierbei kann das Verbindungselement 22 beispielsweise als Stecker, und das Anschlusselement 21 beispielsweise als korrespondierende Buchse für den Stecker ausgestaltet sein.

Bei dem in der Fig. 1 dargestellten Steuerungssystem 1 ist weiters eine Kopplungszustandsüberwachungsvorrichtung 23 ausgebildet. Eine solche Kopplungszustandsüberwachungsvorrichtung 23 kann hierbei zur fortlaufenden Erfassung und Überwachung eines mechanischen Kopplungszustandes der zumindest einen Koppelvorrichtung 17 ausgebildet sein. Zusätzlich oder alternativ kann eine Kopplungszustandsüberwachungsvorrichtung 23 auch zur fortlaufenden Erfassung und Überwachung eines signaltechnischen Verbindungszustandes via das Koppelmittel 15 zwischen der Handbedieneinheit 9 und der wenigstens einen Koppelgegenstelle 16 ausgebildet sein. Beispiele für unterschiedliche, mögliche Ausführungsformen von Kopplungszustandsüberwachungsvorrichtungen 23 werden im Folgenden noch anhand von Ausführungsbeispielen erläutert. Natürlich können grundsätzlich auch mehrere Kopplungszustandsüberwachungsvorrichtungen 23 vorgesehen sein.

Zum Beispiel kann die Kopplungszustandsüberwachungsvorrichtung 23 durch eine Schaltkontakterfassungsvorrichtung 24 gebildet sein, wie dies schematisch und stark vereinfacht in der Fig. 1 dargestellt ist. Eine solche Schaltkontakterfassungsvorrichtung 24 kann beispielsweise zur Detektion eines Schaltzustandes eines Schaltkreises ausgebildet sein, welcher Schaltkreis durch einen dem Anschlusselement 21 zugeordneten Schaltkontakt beim Ankoppeln des Verbindungselementes 22 bzw. beim einem Abkoppeln/Lösen des Verbindungselementes 22 geöffnet respektive geschlossen werden kann. Ein entsprechender Schaltkontakt kann beispielsweise beim Ankoppeln des Verbindungselementes 22 den Schaltkreis schließen und beim Ablösen des Verbindungselementes 22 den Schaltkreis öffnen, sodass durch die Erfassung des Schaltzustandes via eine als Schaltkontakterfassungsvorrichtung 24 ausgebildete Kopplungszustandsüberwachungsvorrichtung 23 in einfacher Art und Weise eine Information über den jeweiligen Koppelzustand der Koppelvorrichtung 17 erhalten werden kann. Zur signaltechnischen Übermittlung des erfassten Kopplungszustandes der Koppelvorrichtung 17 kann die zumindest eine Kopplungszustandsüberwachungsvorrichtung 23 beispielsweise mit der Steuerungsvorrichtung 10 der Handbedieneinheit 9 signaltechnisch kommunikationsverbunden sein, wie dies in der Fig. 1 angedeutet ist.

Wesentlich bei dem gegenständlichen Steuerungssystem 1 ist, dass es zur Freigabe von beaufsichtigungsrelevanten, insbesondere von durch eine Bedienperson 11 unmittelbar zu überwachender Steuerungskommandos im Falle der Erfassung eines hergestellten Kopplungszustandes oder eines bestehenden Verbindungszustandes, und zur Sperre von beaufsichtigungsrelevanten Steuerungskommandos im Falle der Erfassung eines gelösten Kopplungszustandes oder eines unterbrochenen Verbindungszustandes ausgebildet ist.

Die logischen bzw. programmtechnischen Prozesse zur Freigabe oder Sperre der Steuerungskommandos können hierbei beispielsweise in einer Steuerungsvorrichtung 7 des Steuerungssystems 1, welche zur Überwachung und Steuerung der Anlage bzw. von Anlagenkomponenten ausgebildet ist, implementiert sein. Alternativ können diese Prozesse auch in einer weiteren, signal- bzw. datentechnisch mit der zumindest einen Steuerungsvorrichtung 7 verbundenen Steuerungsvorrichtung, insbesondere einer Sicherheitssteuerung bzw. einer Sicherheitsvorrichtung 25 für eine Anlagenkomponente 3 implementiert sein, wie dies schematisch aus der Fig. 1 ersichtlich ist. Im Prinzip ist es aber auch möglich, dass diese logischen, programmtechnischen Prozesse zur Freigabe oder Sperre von beaufsichtigungsrelevanten Steuerungskommandos in der Steuerungsvorrichtung 10 der wenigstens einen Handbedieneinheit 9 abgebildet sind. Die Sicherheitsvorrichtung(en) 25 können wiederum mit den Steuerungsvorrichtungen 7, 10 kabelgebunden oder drahtlos kommunikationsverbunden sein.

Das Steuerungssystem 1 kann hierbei grundsätzlich zur Einstufung aller in Bezug auf Personensicherheit kritischen Steuerungskommandos als beaufsichtigungsrelevante Steuerungskommandos ausgebildet sein.

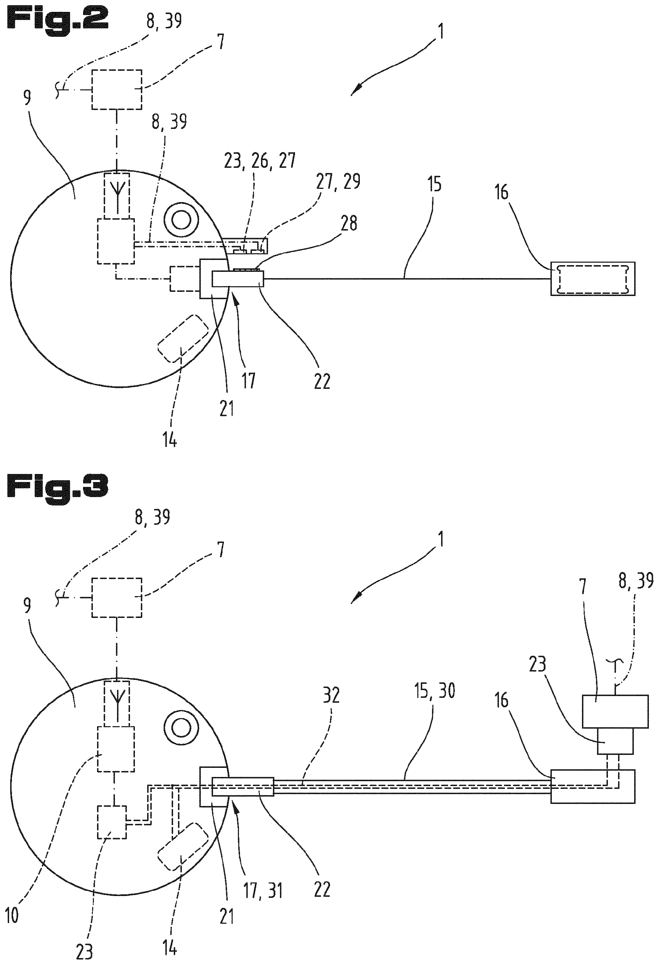

In der Fig. 2 ist eine weitere und gegebenenfalls für sich eigenständige Ausführungsform des Steuerungssystems 1 ausschnittsweise dargestellt, wobei für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

In der Fig. 2 sind ausschnittsweise eine Handbedieneinheit 9 und eine ein Anschlusselement 21 und ein Verbindungselement 22 umfassende Koppelvorrichtung 17 im hergestellten bzw. angekoppelten Kopplungszustand bzw. verbundenem Koppelmittel 15 dargestellt. Bei dem Ausführungsbeispiel gemäß der Fig. 2 ist die Kopplungszustandsüberwachungsvorrichtung 23 durch eine berührungslos erfassende Sensorvorrichtung 26 zur Erfassung der Anwesenheit und/oder der Abwesenheit des Verbindungselementes 22 an dem Anschlusselement 21 gebildet. Eine derartige, berührungslos erfassende Sensorvorrichtung 26 kann beispielsweise magnetische oder induktive Sensoren umfassen, zum Beispiel sind Wirbelstromsensoren geeignet. Bevorzugt werden optisch erfassende Sensorvorrichtungen 27 zur Detektion der An- bzw. Abwesenheit des Verbindungselementes 22 eingesetzt.

Wie weiters in der Fig. 2 dargestellt ist, kann vorgesehen sein, dass zumindest ein Verbindungselement 22 wenigstens eine Kennung 28 aufweist, welche Identifikationsdaten über die der jeweiligen Koppelgegenstelle 16 zugeordneten Anlagenkomponente, Maschine oder Maschinenkomponente umfasst oder repräsentiert. Hierbei kann dass die zumindest eine Kopplungszustandsüberwachungsvorrichtung 23, 26, 27 zur Erfassung der Kennung 28 und zur Übermittlung der Kennung 28 bzw. der Identifikationsdaten an die zumindest eine Steuerungsvorrichtung 7, 10 ausgebildet ist. Wie weiters in der Fig. 2 angedeutet ist kann zum Erfassen der Kennung 28 auch eine eigenständige Lesevorrichtung 29 ausgebildet sein. Die zumindest eine Steuerungsvorrichtung 7, 10 kann in weiterer Folge auf Basis der übermittelten Kennung 28 oder Identifikationsdaten zur signal- und/oder datentechnischen Zuordnung und/oder Freigabe von beaufsichtigungsrelevanten Steuerungskommandos betreffend die jeweils identifizierte Anlagenkomponente, Maschine oder Maschinenkomponente ausgebildet sein.

Beispielsweise kann durch das Steuerungssystem 1 eine sichere und verwechslungsfreie Zuordnung von drahtlos übertragenen Steuerungskommandos durchgeführt werden, sodass im Falle eines Auslösens eines solchen Steuerungskommandos via die Handbedieneinheit 9, von dem Steuerungssystem 1 bzw. einer Steuerungsvorrichtung 7, 10 des Steuerungssystems 1 eine sichere Zuordnung des Kommandos zur betreffenden Anlagenkomponente, im Sinne einer Adressierung vorgenommen werden kann. Außerdem kann das Steuerungssystem 1 auf Basis der zur Freigabe von für die jeweils betreffende Anlagenkomponente gültige und durchführbare Steuerungskommandos bzw. entsprechende beaufsichtigungsrelevante Steuerungskommandos, sowie zur Sperre von für die jeweilige Anlagenkomponente nicht gültigen bzw. undurchführbaren Steuerungskommandos ausgebildet sein. Das Steuerungssystem 1 kann hierbei zur fortlaufenden Überwachung der Kennung bzw. der Anwesenheit der Kennung 28 via zumindest eine Kopplungszustandsüberwachungsvorrichtung 23 oder die eigenständige Lesevorrichtung 29 ausgebildet sein.

Wie dies in der Fig. 2 dargestellt ist, können hierzu die zumindest eine Kopplungszustandsüberwachungsvorrichtung 23 oder die eigenständige Lesevorrichtung 29 durch eine berührungslos erfassende Lesevorrichtung gebildet sein, sowie das jeweilige Verbindungselement 22 eine mittels der berührungslos erfassenden Lesevorrichtung 23, 29 erfassbare Kennung 28 aufweisen. In einer bevorzugten Ausführungsvariante ist die Lesevorrichtung 23, 29 durch eine optisch erfassende Sensorvorrichtung 27 gebildet, und weist das jeweilige Verbindungselement 22 eine mittels der optischen Sensorvorrichtung 27 lesbare Kennung 28 auf.

Das Steuerungssystem 1 bzw. eine Steuerungsvorrichtung 7, 10 kann in weiterer Folge auf Basis der übermittelten Kennung 28 oder Identifikationsdaten zur automatischen oder bedarfsweise aufrufbaren Ausgabe von Informationen betreffend die der entsprechenden Koppelgegenstelle 16 zugeordneten Anlagenkomponente, Maschine oder Maschinenkomponente an der Handbedieneinheit 9 ausgebildet sein.

In der Fig. 3 ist eine weitere und gegebenenfalls für sich eigenständige Ausführungsform des Steuerungssystems 1 ausschnittsweise dargestellt, wobei für gleiche Teile gleiche Bezugszeichen bzw. Bauteilbezeichnungen wie in den vorangegangenen Fig. 1 und 2 verwendet werden. Um unnötige Wiederholungen zu vermeiden, wird auf die detaillierte Beschreibung in den vorangegangenen Fig. 1 und 2 hingewiesen bzw. Bezug genommen.

In der Fig. 3 ist eine Ausführungsvariante des Steuerungssystems 1 dargestellt, bei welchem das Koppelmittel 15 durch ein elektrisch leitendes Kabel 30 gebildet ist, und die wenigstens eine Koppelvorrichtung 17 durch eine elektrische Steckverbindung 31 gebildet ist. Hierzu umfasst das Koppelmittel 15 bzw. das Kabel 30 elektrische Leiter 32, und kann das Steuerungssystem 1 bei Vorliegen einer physischen Bindung zwischen der Handbedieneinheit 9 und der wenigstens einen Koppelgegenstelle 16 via das Koppelmittel 15, 30 zur elektrischen Stromversorgung der Handbedieneinheit 9 und/oder zum Aufladen der internen Stromversorgungseinheit 14 der Handbedieneinheit 9 ausgebildet sein.

Bei einer solchen Ausgestaltungsvariante des Koppelmittels 15 kann es von Vorteil sein, wenn die zumindest eine Kopplungszustandsüberwachungsvorrichtung 23 zur fortlaufenden Überwachung einer elektrisch leitenden Verbindung zwischen der Handbedieneinheit 9 und der wenigstens einen Koppelgegenstelle 16 ausgebildet ist. Wie in der Fig. 3 des Weiteren angedeutet ist, kann eine derart ausgestaltete Kopplungszustandsüberwachungsvorrichtung 23 der Koppelgegenstelle 16, oder der Handbedieneinheit 9 zugeordnet sein, oder kann die Kopplungszustandsüberwachungsvorrichtung 23 sowohl Komponenten an der Koppelgegenstelle 16 und der Handbedieneinheit 9 umfassen. Die in der Fig. 3 gezeigte Kopplungszustandsüberwachungsvorrichtung 23 kann bzw. können hierbei zum Beispiel zur fortlaufenden Prüfung eines Stromflusses über das Koppelmittel 15 bzw. das elektrische Kabel 30 ausgebildet sein.

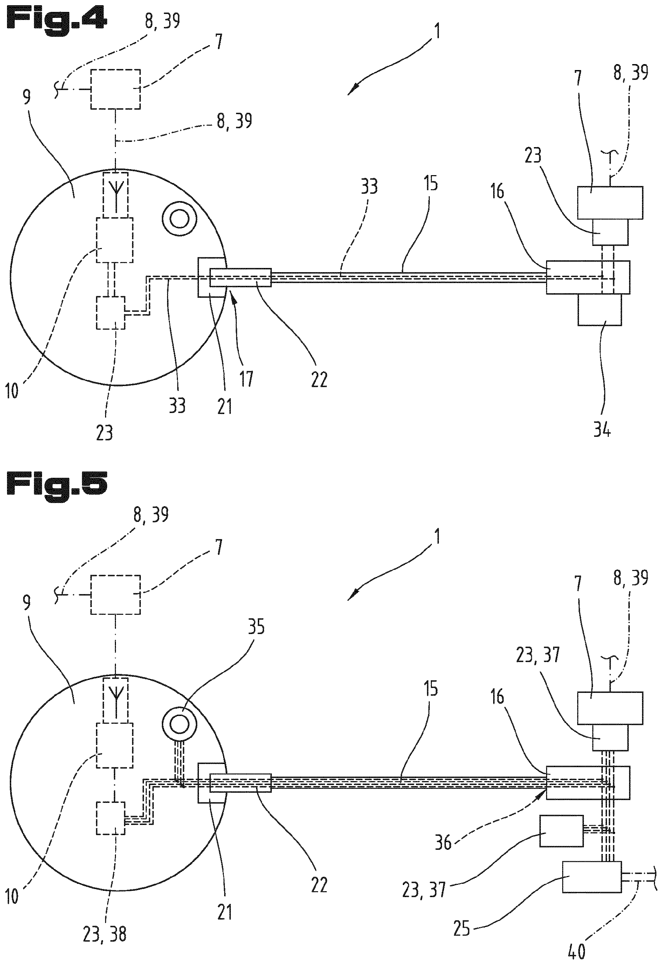

In der Fig. 4 ist eine weitere und gegebenenfalls für sich eigenständige Ausführungsform des Steuerungssystems 1 ausschnittsweise dargestellt, wobei für gleiche Teile gleiche Bezugszeichen bzw. Bauteilbezeichnungen wie in den vorangegangenen Fig. 1 bis 3 verwendet werden. Um unnötige Wiederholungen zu vermeiden, wird auf die detaillierte Beschreibung in den vorangegangenen Fig. 1 bis 3 hingewiesen bzw. Bezug genommen.

Bei dem in der Fig. 4 dargestellten Ausführungsbeispiel umfasst das Koppelmittel 15 wenigstens eine Signalübertragungsleitung 33, sodass bei Vorliegen eines hergestellten Kopplungszustandes der Koppelvorrichtung 17 Signale zwischen einer Koppelgegenstelle 16 bzw. einer mit der Koppelgegenstelle 16 kommunikationsverbundenen Steuerungsvorrichtung 7 und der Handbedieneinheit 9 bzw. der Steuerungsvorrichtung 10 der Handbedieneinheit 9 übertragbar sind. Die Signalübertragungsleitung(en) 33 können hierbei beispielsweise durch Lichtleiter oder durch elektrische Leiter gebildet sein, wobei selbstverständlich auch Kombinationen aus Licht- und elektrischen Leitern möglich sind.

Bei einer solchen Ausgestaltungsvariante des Koppelmittels 15 kann es zweckmäßig sein, wenn die zumindest eine Kopplungszustandsüberwachungsvorrichtung 23 zur fortlaufenden Überwachung einer Signalverbindung zwischen der Handbedieneinheit 9 und der wenigstens einen Koppelgegenstelle 16 ausgebildet ist. Wie in der Fig. 4 wiederum angedeutet ist, kann eine derart ausgestaltete Kopplungszustandsüberwachungsvorrichtung 23 der Koppelgegenstelle 16 oder der Handbedieneinheit 9 zugeordnet sein, oder kann die Kopplungszustandsüberwachungsvorrichtung 23 sowohl Komponenten an der Koppelgegenstelle 16 und der Handbedieneinheit 9 umfassen. Die in der Fig. 4 dargestellte Kopplungszustandsüberwachungsvorrichtung 23 kann bzw. können hierbei zum Beispiel zur fortlaufenden Prüfung einer signaltechnischen Übertragung über das Koppelmittel 15 ausgebildet sein.

Bei einer Ausgestaltungsform des Koppelmittels 15 mit Signalübertragungsleitungen 33, wie in der Fig. 4 dargestellt, kann das Steuerungssystem 1 auch zur Übertragung bzw. Bereitstellung einer datentechnischen Kennung via die wenigstens eine Signalübertragungsleitung 33 an die Handbedieneinheit 9 bzw. die Steuerungsvorrichtung 10 der Handbedieneinheit 9 ausgebildet sein. In diesem Falle kann eine entsprechende datentechnische Kennung beispielsweise in einer der Koppelgegenstelle 16 zugeordneten, elektronischen Speichereinheit 34 hinterlegt bzw. abgespeichert sein. Eine solche datentechnische Kennung kann wiederum Identifikationsdaten über die der jeweiligen Koppelgegenstelle 16 zugeordneten Anlagenkomponente, Maschine oder Maschinenkomponente umfassen, und kann die Handbedieneinheit 9 bzw. die Steuerungsvorrichtung 10 der Handbedieneinheit 9 auf Basis der übermittelten, datentechnischen Kennung oder der Identifikationsdaten zur signal- und/oder datentechnischen Zuordnung und/oder Freigabe von beaufsichtigungsrelevanten Steuerungskommandos betreffend die jeweils identifizierte Anlagenkomponente, Maschine oder Maschinenkomponente ausgebildet sein.

Das Steuerungssystem 1 kann auf diese Weise zum Beispiel eine sichere und verwechslungsfreie Zuordnung von drahtlos übertragenen Steuerungskommandos durchführen, sodass im Falle eines Auslösens eines solchen Steuerungskommandos via die Handbedieneinheit 9, von dem Steuerungssystem 1 bzw. einer Steuerungsvorrichtung 7, 10 des Steuerungssystems 1 eine sichere Zuordnung des Kommandos zur betreffenden Anlagenkomponente, im Sinne einer Adressierung vorgenommen werden kann. Eine über den bloßen Ankoppelvorgang hinausgehender zusätzlicher Auswahlschritt seitens des Benutzers ist hierdurch erübrigt. Damit ist auch eine fehlerhafte Zuordnung etwa zufolge einer fehlerhaften Benutzereingabe beziehungsweise zufolge eines Irrtums einer Bedienperson, beispielsweise bei einer Auswahl einer von mehreren Maschinen zuverlässig unterbunden. Außerdem kann das Steuerungssystem 1 auf Basis der zur Freigabe von für die jeweils betreffende Anlagenkomponente gültige und durchführbare Steuerungskommandos bzw. entsprechende beaufsichtigungsrelevante Steuerungskommandos, sowie zur Sperre von für die jeweilige Anlagenkomponente nicht gültigen bzw. undurchführbaren Steuerungskommandos ausgebildet sein.

In weiterer Folge ist auch eine Ausgestaltungsvariante des Steuerungssystems 1 möglich, bei welcher die die Handbedieneinheit 9 auf Basis der via die zumindest eine Signalübertragungsleitung 33 des Koppelmittels 15 übermittelten, datentechnische Kennung oder Identifikationsdaten zur automatischen oder bedarfsweise aufrufbaren Ausgabe von Informationen betreffend die der entsprechenden Koppelgegenstelle 16 zugeordneten Anlagenkomponenten, Maschinen oder Maschinenkomponenten an der Handbedieneinheit 9 ausgebildet ist.

Bei einer weiteren, bevorzugten Ausgestaltungsform des Steuerungssystems 1 kann vorgesehen sein, dass es bei Vorliegen einer physischen und signaltechnischen Verbindung über das zumindest eine Koppelmittel 15 zwischen der Handbedieneinheit 9 und einer Koppelgegenstelle 16 zur Übertragung der beaufsichtigungsrelevanten Steuerungskommandos von der Handbedieneinheit 9 bzw. der Steuerungsvorrichtung 10 der Handbedieneinheit 9 an die zumindest eine Steuerungsvorrichtung 7 via das zumindest eine Koppelmittel 15 bzw. die Signalübertragungsleitung(en) 33 des Koppelmittels 15 und via die Koppelgegenstelle 16 ausgebildet ist, wie dies auch in der Fig. 4 schematisch angedeutet ist. Hierbei kann zum Beispiel vorgesehen sein, dass das Steuerungssystem 1 zur Übertragung der Steuerungskommandos unter Verwendung eines echtzeitfähigen Busprotokolls und/oder unter Verwendung eines sicherheitsgerichteten Busprotokolls ausgebildet ist. Beispiele für solche Busprotokolle sind etwa EtherCAT, Safety-over-EtherCAT, ProfiNET oder Profibus.

Bei einer besonders sicheren, insbesondere hinsichtlich Personensicherheit sinnvollen Ausgestaltungsform des Steuerungssystems 1 weist die Handbedieneinheit 9 zumindest ein manuell auslösbares Sicherheitsschaltelement 35 auf, wie dies in der Fig. 5 dargestellt ist.

In der Fig. 5 ist eine weitere und gegebenenfalls für sich eigenständige Ausführungsform des Steuerungssystems 1 ausschnittsweise dargestellt, wobei für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung in den vorangegangenen Fig. 1 bis 4 hingewiesen bzw. Bezug genommen.

Das in der Fig. 5 dargestellte Sicherheitsschaltelement 35 an der Handbedieneinheit 9 kann beispielsweise durch einen sogenannten, gegebenenfalls mehrstufigen Zustimmtaster gebildet sein. Bevorzugt weist die Handbedieneinheit wenigstens ein als Not-Aus- bzw. Not-Stopp-Schalter ausgebildetes Sicherheitsschaltelement 35 auf.

Bei Vorhandensein eines solchen Sicherheitsschaltelements 35 an der Handbedieneinheit 9 kann das Steuerungssystem 1 bei Vorliegen einer physischen und signaltechnischen Verbindung anhand eines entsprechend ausgestalteten Koppelmittels 15 zwischen der Handbedieneinheit 9 und der Koppelgegenstelle 16, und bei manueller Auslösung des Sicherheitsschaltelements 35 zur Übertragung bzw. Bereitstellung eines Sicherheitssignals via das Koppelmittel 15 und die Koppelgegenstelle 16 ausgehend von der Handbedieneinheit 9 an die zumindest eine Steuerungsvorrichtung 7 oder an eine separat ausgestaltete Sicherheitsvorrichtung 25 ausgebildet sein, wie die schematisch in der Fig. 5 ersichtlich ist. Die Sicherheitsvorrichtung kann hierbei in der Folge zum Beispiel zu einem umgehenden Stoppen von Maschinenkomponenten via Sicherheitssteuerleitungen 40, oder beispielsweise zur kompletten Stillsetzung einer Anlagenkomponente bzw. Maschine ausgebildet sein.

Insbesondere kann die signaltechnische Verbindung anhand des Koppelmittels 15 zwischen der Handbedieneinheit 9 und der Koppelgegenstelle 16 einen sogenannten Sicherheitsschaltkreis 36 umfassen, welcher direkt über entsprechende Öffnerkontakte via das Sicherheitsschaltelement 35, beispielsweise einen Not-Aus-Schalter ausgelöst werden kann. Im Besonderen kann ein derartiger Sicherheitsschaltkreis 36 zweikreisig, und damit einfehlersicher ausgeführt sein, wie dies in der Fig. 5 schematisch angedeutet ist.

Bei dem in der Fig. 5 dargestellten Ausführungsform des Steuerungssystems 1 kann in weiterer Folge vorgesehen sein, dass die zumindest eine Kopplungszustandsüberwachungsvorrichtung 23 zur fortlaufenden Überwachung der ordnungsgemäßen Signalverbindung zwischen dem Sicherheitsschaltelement 35 der Handbedieneinheit 9 und der zumindest einen Steuerungsvorrichtung 7 oder zwischen dem Sicherheitsschaltelement 35 der Handbedieneinheit 9 und der separat ausgestaltete Sicherheitsvorrichtung 25 ausgebildet ist.

Zum Beispiel kann vorgesehen sein, dass die Kopplungszustandsüberwachungsvorrichtung 23 eine Sicherheitsschaltung 37 an der Koppelgegenstelle 16 umfasst, welche zur periodischen Kurzschluss- und Querschlussprüfung der ordnungsgemäßen Signalverbindung zwischen dem Sicherheitsschaltelement 35 der Handbedieneinheit 9 und der zumindest einen Steuerungsvorrichtung 7 oder zwischen dem Sicherheitsschaltelement 35 der Handbedieneinheit 9 und der separat ausgestaltete Sicherheitsvorrichtung 25 ausgebildet ist. Wie in der Fig. 5 schließlich ebenfalls dargestellt ist, kann die Kopplungszustandsüberwachungsvorrichtung 23 eine weitere, an der Handbedieneinheit 9 ausgebildete Sicherheitsschaltung 38 umfassen, welche zur fortlaufenden Überprüfung der periodischen Kurzschluss- und Querschlussprüfungen der Sicherheitsschaltung 37 an der Koppelgegenstelle 16 ausgebildet ist.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Steuerungssystem | 29 | Lesevorrichtung |
| 2 | Anlage | 30 | Kabel |
| 3 | Anlagenkomponente | 31 | Steckverbindung |
| 4 | Industrieroboter | 32 | Leiter |
| 5 | Bearbeitungsstation | 33 | Signalübertragungsleitung |
| 6 | Transportvorrichtung | 34 | Speichereinheit |
| 7 | Steuerungsvorrichtung | 35 | Sicherheitsschaltelement |
| 8 | Kommunikationsverbindung | 36 | Sicherheitsschaltkreis |
| 9 | Handbedieneinheit | 37 | Sicherheitsschaltung |
| 10 | Steuerungsvorrichtung | 38 | Sicherheitsschaltung |
| 11 | Bedienperson | 39 | Kommunikationsverbindung |
| 12 | Ausgabeelement | 40 | Sicherheitssteuerleitungen |
| 13 | Eingabeelement | | |
| 14 | Stromversorgungseinheit | | |
| 15 | Koppelmittel | | |
| 16 | Koppelgegenstelle | | |
| 17 | Koppelvorrichtung | | |
| 18 | Haltevorrichtung | | |
| 19 | Wickelvorrichtung | | |
| 20 | Antrieb | | |
| 21 | Anschlusselement | | |
| 22 | Verbindungselement | | |
| 23 | Kopplungszustandsüberwachungsvorrichtung | | |
| 24 | Schaltkontakterfassungsvorrichtung | | |
| 25 | Sicherheitsvorrichtung | | |
| 26 | Sensorvorrichtung | | |
| 27 | Sensorvorrichtung | | |
| 28 | Kennung | | |

## Patentansprüche

1. Steuerungssystem (1) für elektrisch gesteuerte Anlagen, umfassend
zumindest eine elektronische Steuerungsvorrichtung (7) zur Überwachung und Steuerung einer Anlage (2) und/oder von Anlagenkomponenten (3),
wenigstens eine tragbare, mobile Handbedieneinheit (9) zur Anzeige von Informationen und zur Eingabe von Steuerungskommandos, mit einer internen Stromversorgungseinheit (14) für die zeitweilige, elektrische Stromversorgung der Handbedieneinheit (9),
eine drahtlose Kommunikationsverbindung (8) zwischen der zumindest einen Steuerungsvorrichtung (7) und der Handbedieneinheit (9) zur Übertragung von Informationen und Steuerungskommandos zwischen der Handbedieneinheit (9) und der Steuerungsvorrichtung (7),
wobei zumindest ein formflexibles, materielles Koppelmittel (15) mit begrenzter maximaler Längserstreckung, welches Koppelmittel (15) via zumindest eine werkzeuglos betätigbare Koppelvorrichtung (17) zum wahlweisen Herstellen und Lösen einer physischen Bindung zwischen der Handbedieneinheit (9) und wenigstens einer räumlich feststehend angeordneten, maschinenseitigen Koppelgegenstelle (16) vorgesehen ist,
**dadurch gekennzeichnet, dass** zumindest eine Kopplungszustandsüberwachungsvorrichtung (23) zur fortlaufenden Erfassung und Überwachung eines mechanischen Kopplungszustandes der zumindest einen Koppelvorrichtung (17) und/oder zur fortlaufenden Erfassung und Überwachung eines signaltechnischen Verbindungszustandes via das Koppelmittel (15) zwischen der Handbedieneinheit (9) und der wenigstens einen Koppelgegenstelle (16) ausgebildet ist,
wobei das Steuerungssystem (1) zur Freigabe der Eingabe von beaufsichtigungsrelevanten, insbesondere von durch eine Bedienperson unmittelbar zu überwachender, Steuerungskommandos an der Handbedieneinheit im Falle der Erfassung eines hergestellten Kopplungszustandes oder eines bestehenden Verbindungszustandes, und zur Sperre der Eingabe der beaufsichtigungsrelevanten Steuerungskommandos via die Handbedieneinheit im Falle der Erfassung eines gelösten Kopplungszustandes oder eines unterbrochenen Verbindungszustandes ausgebildet ist.

2. Steuerungssystem nach Anspruch 1, **dadurch gekennzeichnet, dass** das Koppelmittel (15) eine maximale Längserstreckung ausgewählt aus einem Bereich zwischen 2 Meter und 25 Meter aufweist.

3. Steuerungssystem nach einem der Ansprüche 1 oder 2, **dadurch gekennzeichnet, dass** zumindest alle in Bezug auf Personensicherheit kritischen Steuerungskommandos als beaufsichtigungsrelevante Steuerungskommandos eingestuft sind.

4. Steuerungssystem nach einem der vorhergehenden Ansprüche, **dadurch gekennzeichnet, dass** die wenigstens eine Koppelvorrichtung (17) durch ein an der Handbedieneinheit (9) ausgebildetes Anschlusselement (21), sowie durch ein an einem Längsende des zumindest einen Koppelmittels (15) angeordnetes und zum werkzeuglos ausführbaren, form- und/oder kraftschlüssigen Verbinden mit dem Anschlusselement (21) vorgesehenes Verbindungselement (22) gebildet ist.

5. Steuerungssystem nach Anspruch 4, **dadurch gekennzeichnet, dass** die Kopplungszustandsüberwachungsvorrichtung (23) durch eine elektrische Schaltkontakterfassungsvorrichtung (24) zur Detektion eines mit dem Anschlusselement (21) gekoppelten Verbindungselementes (22) ausgebildet ist.

6. Steuerungssystem nach Anspruch 4, **dadurch gekennzeichnet, dass** die Kopplungszustandsüberwachungsvorrichtung (23) durch eine berührungslos erfassende Sensorvorrichtung (26) zur Erfassung der Anwesenheit und/oder der Abwesenheit des Verbindungselementes (22) an dem Anschlusselement (21) ausgebildet ist.

7. Steuerungssystem nach einem der vorhergehenden Ansprüche, **dadurch gekennzeichnet, dass** es mehrere voneinander distanzierte maschinenseitige Koppelgegenstellen (16) umfasst, welchen Koppelgegenstellen (16) jeweils elektrisch steuerbaren Anlagenkomponenten (3) oder elektrisch steuerbaren Maschinen oder elektrisch steuerbare Maschinenkomponenten ortsnah zugeordnet sind.

8. Steuerungssystem nach Anspruch 7, **dadurch gekennzeichnet, dass** zumindest einer der Koppelgegenstellen (16) ein materielles Koppelmittel (15) funktionsspezifisch zugeordnet ist, sodass die entsprechende Koppelgegenstelle (16) und das entsprechende Koppelmittel (15) ein Funktionspaar ausbilden.

9. Steuerungssystem nach Anspruch 8, **dadurch gekennzeichnet, dass** die maximale Längserstreckung eines jeweiligen Koppelmittels (15) hinsichtlich einer maximal erforderlichen oder maximal zulässigen Distanzierung der Handbedieneinheit (9) von der Koppelgegenstelle (16) angepasst ist.

10. Steuerungssystem nach einem der Ansprüche 4 bis 9, **dadurch gekennzeichnet, dass** zumindest ein Verbindungselement (22) wenigstens eine Kennung (28) aufweist, welche Identifikationsdaten über die der jeweiligen Koppelgegenstelle (16) zugeordneten Anlagenkomponente (3), Maschine oder Maschinenkomponente umfasst oder repräsentiert, und dass die zumindest eine Kopplungszustandsüberwachungsvorrichtung (23) oder eine eigenständige Lesevorrichtung (29) zur Erfassung der Kennung (28) und zur Übermittlung der Kennung (28) oder der Identifikationsdaten an die zumindest eine Steuerungsvorrichtung (7, 10) ausgebildet ist, und dass die Steuerungsvorrichtung (7, 10) auf Basis der übermittelten Kennung (28) oder Identifikationsdaten zur signal- und/oder datentechnischen Zuordnung und/oder Freigabe von beaufsichtigungsrelevanten Steuerungskommandos betreffend die jeweils identifizierte Anlagenkomponente (3), Maschine oder Maschinenkomponente ausgebildet ist.

11. Steuerungssystem nach Anspruch 10, **dadurch gekennzeichnet, dass** es auf Basis der übermittelten Kennung (28) oder Identifikationsdaten zur automatischen oder bedarfsweise aufrufbaren Ausgabe von Informationen betreffend die der entsprechenden Koppelgegenstelle (16) zugeordneten Anlagenkomponente (3), Maschine oder Maschinenkomponente an der Handbedieneinheit ausgebildet ist.

12. Steuerungssystem nach einem der vorhergehenden Ansprüche, **dadurch gekennzeichnet, dass** das Koppelmittel (15) durch ein elektrisch leitendes Kabel (30) gebildet ist, und die wenigstens eine Koppelvorrichtung (17) durch eine elektrische Steckverbindung (31) gebildet ist., wobei das Steuerungssystem bei Vorliegen einer physischen Bindung zwischen der Handbedieneinheit (9) und der wenigstens einen Koppelgegenstelle (16) via das Koppelmittel (15) zur elektrischen Stromversorgung der Handbedieneinheit (9) und/oder zum Aufladen der internen Stromversorgungseinheit (14) der Handbedieneinheit (9) ausgebildet ist.

13. Steuerungssystem nach einem der vorhergehenden Ansprüche, **dadurch gekennzeichnet, dass** das Koppelmittel (15) wenigstens eine Signalübertragungsleitung (33) umfasst.

14. Steuerungssystem nach Anspruch 12 oder 13, **dadurch gekennzeichnet, dass** die zumindest eine Kopplungszustandsüberwachungsvorrichtung (23) zur fortlaufenden Überwachung einer elektrisch leitenden Verbindung und/oder zur fortlaufenden Überwachung einer Signalverbindung zwischen der Handbedieneinheit (9) und der wenigstens einen Koppelgegenstelle (16) ausgebildet ist.

15. Steuerungssystem nach Anspruch 13 oder 14, **dadurch gekennzeichnet, dass** es zur Übertragung einer datentechnischen Kennung (28) via die wenigstens eine Signalübertragungsleitung (33) an die Handbedieneinheit (9) ausgebildet ist, welche datentechnische Kennung Identifikationsdaten über die der jeweiligen Koppelgegenstelle (16) zugeordneten Anlagenkomponente (3), Maschine oder Maschinenkomponente umfasst, und dass die Handbedieneinheit (9) auf Basis der übermittelten Kennung oder Identifikationsdaten zur signal- und/oder datentechnischen Zuordnung und/oder Freigabe von beaufsichtigungsrelevanten Steuerungskommandos betreffend die jeweils identifizierte Anlagenkomponente (3), Maschine oder Maschinenkomponente ausgebildet ist.

16. Steuerungssystem nach Anspruch 15, **dadurch gekennzeichnet, dass** die Handbedieneinheit (9) auf Basis der übermittelten, datentechnischen Kennung oder Identifikationsdaten zur automatischen oder bedarfsweise aufrufbaren Ausgabe von Informationen betreffend die der entsprechenden Koppelgegenstelle (16) zugeordneten Anlagenkomponenten (3), Maschinen oder Maschinenkomponenten an der Handbedieneinheit (9) ausgebildet ist.

17. Steuerungssystem nach einem der Ansprüche 13 bis 16, **dadurch gekennzeichnet, dass** es bei Vorliegen einer physischen und signaltechnischen Verbindung über das zumindest eine Koppelmittel (15) zwischen der Handbedieneinheit (9) und einer Koppelgegenstelle (16) zur Übertragung der beaufsichtigungsrelevanten Steuerungskommandos von der Handbedieneinheit (9) an die zumindest eine Steuerungsvorrichtung (7) via das zumindest eine Koppelmittel (15) und die Koppelgegenstelle (16) ausgebildet ist.

18. Steuerungssystem nach einem der Ansprüche 13 bis 17, **dadurch gekennzeichnet, dass** die Handbedieneinheit (9) zumindest ein manuell auslösbares Sicherheitsschaltelement (35) aufweist, und dass das Steuerungssystem (1) bei Vorliegen einer physischen und signaltechnischen Verbindung anhand eines Koppelmittels (15) zwischen der Handbedieneinheit (9) und der Koppelgegenstelle (16) und bei manueller Auslösung des Sicherheitsschaltelements (35) zur Übertragung eines Sicherheitssignals via das Koppelmittel (15) und die Koppelgegenstelle (16) ausgehend von der Handbedieneinheit (9) an die zumindest eine Steuerungsvorrichtung (7) oder an eine separat ausgestaltete Sicherheitsvorrichtung (25) ausgebildet ist, wobei die zumindest eine Kopplungszustandsüberwachungsvorrichtung (23) zur fortlaufenden Überwachung der ordnungsgemäßen Signalverbindung zwischen dem Sicherheitsschaltelement (35) der Handbedieneinheit (9) und der zumindest einen Steuerungsvorrichtung (7) oder zwischen dem Sicherheitsschaltelement (35) der Handbedieneinheit (9) und der separat ausgestaltete Sicherheitsvorrichtung (25) ausgebildet ist.

19. Steuerungssystem nach einem der Ansprüche 1 bis 11, **dadurch gekennzeichnet, dass** das zumindest eine Koppelmittel (15) durch ein signaltechnisch inaktives Mittel, insbesondere durch eine Schnur, eine Leine, ein Band oder ein Seil gebildet ist.

20. Steuerungssystem nach einem der vorhergehenden Ansprüche, **dadurch gekennzeichnet, dass** die wenigstens eine Koppelgegenstelle (16) eine Aufbewahrungs- oder Haltevorrichtung (18) für das Koppelmittel (15) umfasst.

## Claims

1. A control system (1) for electrically controlled installations, comprising
at least one electronic control device (7) for monitoring and controlling an installation (2) and/or installation components (3),
at least one portable, mobile manual control unit (9) for displaying information and for inputting control commands, with an internal power supply unit (14) for the temporary, electrical power supply of the manual control unit (9),
a wireless communication connection (8) between the at least one control device (7) and the manual control unit (9) for transmitting information and control commands between the manual control unit (9) and the control device (7),
wherein at least one form-flexible, material coupling means (15) with a limited maximum longitudinal extension is provided, which coupling means (15) is provided via at least one coupling device (17) that can be activated without the use of tools for the optional creation and disconnection of a physical link between the manual control unit (9) and at least one spatially fixed machine-side coupling counterpart (16),
**characterized in that** at least one coupling state monitoring device (23) is designed for the continuous detection and monitoring of a mechanical coupling state of the at least one coupling device (17) and/or for the continuous detection and monitoring of a signaling connection state via the coupling means (15) between the manual control unit (9) and the at least one coupling counterpart (16),
wherein the control system (1) is designed for enabling the input of supervisory-relevant control commands, in particular control commands to be monitored directly by an operator on the manual control unit in case of the detection of a created coupling state or an existing connection state and for blocking the input of supervisory-relevant control commands via the manual control unit in case of the detection of a disconnected coupling state or an interrupted connection state.

2. The control system according to claim 1, **characterized in that** the coupling means (15) has a maximum longitudinal extension selected from a range between 2 meters and 25 meters.

3. The control system according to one of claims 1 or 2, **characterized in that** at least all of the control commands critical to personal safety are classed as supervisory-relevant control commands.

4. The control system according to one of the preceding claims, **characterized in that** the at least one coupling device (17) is formed by a terminal element (21) on the manual control unit (9) and by a connecting element (22) arranged at a longitudinal end of the at least one coupling means (15) and provided for connecting to the terminal element (21) in a form-fitting and/or force-fitting manner without the use of tools.

5. The control system according to claim 4, **characterized in that** the coupling state monitoring device (23) is formed by an electric switch contact detection device (24) for detecting a connecting element (22) coupled to the terminal element (21).

6. The control system according to claim 4, **characterized in that** the coupling state monitoring device (23) is formed by a contactlessly detecting sensor device (26) for detecting the presence and/or absence of the connecting element (22) at the terminal element (21).

7. The control system according to one of the preceding claims, **characterized in that** it comprises a plurality of spaced apart machine-side coupling counterparts (16), which coupling counterparts (16) are assigned locally to electrically controllable installation components (3) or electrically controllable machines or electrically controllable machine components.

8. The control system according to claim 7, **characterized in that** a material coupling means (15) is assigned functionally-specifically to at least one of the coupling counterparts (16), so that the corresponding coupling counterpart (16) and the corresponding coupling means (15) form a functional pair.

9. The control system according to claim 8, **characterized in that** the maximum longitudinal extension of a respective coupling means (15) is adjusted with respect to the maximum required or maximum permissible spacing of the manual control unit (9) from the coupling counterpart (16).

10. The control system according to one of claims 4 to 9, **characterized in that** at least one connecting element (22) comprises at least one identifier (28), which comprises or represents identification data about the installation component (3), machine or machine component assigned to the respective coupling counterpart (16), and the at least one coupling state monitoring device (23) or an independent reading device (29) is designed for detecting the identifier (28) and for transmitting the identifier (28) or the identification data to the at least one control device (7, 10), and the control device (7, 10) is designed on the basis of the transmitted identifier (28) or identification data for signal and/or data technical assignment and/or release of supervisory-relevant control commands relating to the respectively identified installation component (3), machine or machine component.

11. The control system according to claim 10, **characterized in that** it is designed on the basis of the transmitted identifier (28) or identification data for automatic or on demand retrievable output of information relating to the installation component (3), machine or machine component assigned to the corresponding coupling counterpart (16) on the manual control unit.

12. The control system according to one of the preceding claims, **characterized in that** the coupling means (15) is formed by an electrically conducting cable (30), and the at least one coupling device (17) is formed by an electric plug connection (31), wherein the control system is designed in the presence of a physical link between the manual control unit (9) and the at least one coupling counterpart (16) via the coupling means (15) for electrically supplying power to the manual control unit (9) and/or for charging the internal power supply unit (14) of the manual control unit (9).

13. The control system according to one of the preceding claims, **characterized in that** the coupling means (15) comprises at least one signal transmission line (33).

14. The control system according to claim 12 or 13, **characterized in that** the at least one coupling state monitoring device (23) is designed for the continuous monitoring of an electrically conducting connection and/or for the continuous monitoring of a signal connection between the manual control unit (9) and the at least one coupling counterpart (16).

15. The control system according to claim 13 or 14, **characterized in that** it is designed for transmitting a data technical identifier (28) via the at least one signal transmission line (33) to the manual control unit (9), which data technical identifier comprises identification data about the installation component (3), machine or machine component assigned to the respective coupling counterpart (16), and the manual control unit (9) is designed on the basis of the transmitted identifier or identification data for the signal and/or data technical allocation and/or release of supervisory-relevant control commands relating to the respectively identified installation component (3), machine or machine component.

16. The control system according to claim 15, **characterized in that** the manual control unit (9) is designed on the basis of the transmitted, data technical identifier or identification data for automatic or on demand retrievable output of information relating to the installation components (3), machines or machine components assigned to the corresponding coupling counterpart (16) on the manual control unit (9).

17. The control system according to one of claims 13 to 16, **characterized in that** it is designed in the presence of a physical and signal technical connection via the at least one coupling means (15) between the manual control unit (9) and a coupling counterpart (16) for transmitting the supervisory-relevant control commands from the manual control unit (9) to the at least one control device (7) via the at least one coupling means (15) and the coupling counterpart (16).

18. The control system according to one of claims 13 to 17, **characterized in that** the manual control unit (9) comprises at least one manually triggerable safety switching element (35), and the control system (1) in the presence of a physical and signaling connection by way of a coupling means (15) between the manual control unit (9) and the coupling counterpart (16) and with the manual triggering of the safety switching element (35) is designed for transmitting a safety signal via the coupling means (15) and the coupling counterpart (16) from the manual control unit (9) to the at least one control device (7) or to a separately designed safety device (25), wherein the at least one coupling state monitoring device (23) is designed for the continuous monitoring of the proper signal connection between the safety switching element (35) of the manual control unit (9) and the at least one control device (7) or between the safety switching element (35) of the manual control unit (9) and the separately designed safety device (25).

19. The control system according to one of claims 1 to 11, **characterized in that** the at least one coupling means (15) is formed by a signal-technical inactive means, in particular by a cord, a line, a band or a rope.

20. The control system according to one of the preceding claims, **characterized in that** the at least one coupling counterpart (16) comprises a storage or holding device (18) for the coupling means (15).

## Revendications

1. Système de commande (1) pour des installations à commande électrique, comprenant au moins un dispositif de commande (7) électronique destiné à la surveillance et à la commande d'une installation (2) et/ou de composantes d'installation (3),
au moins une unité de manoeuvre (9) portable mobile destinée à l'affichage d'informations et à l'entrée d'instructions de commande, avec une unité d'alimentation en courant (14) interne pour l'alimentation en courant électrique temporaire de l'unité de manoeuvre (9),
un raccordement de communication (8) sans fil entre l'au moins un dispositif de commande (7) et l'unité de manoeuvre (9) pour la transmission d'informations et d'instructions de commande entre l'unité de manoeuvre (9) et le dispositif de commande (7),
dans lequel il est prévu au moins un moyen de couplage (15) matériel de forme flexible avec une extension longitudinale maximale limitée, lequel moyen de couplage (15) est prévu, via au moins un dispositif de couplage (17) actionnable sans outil, pour au choix l'établissement et la suppression d'une liaison physique entre l'unité de manoeuvre (9) et au moins un poste homologue de couplage (16) côté machine disposé de façon stationnaire dans l'espace,
**caractérisé en ce qu'**il est constitué un dispositif de surveillance de l'état de couplage (23) destiné à la détection et surveillance continues d'un état de couplage mécanique de l'au moins un dispositif de couplage (17) et/ou destiné à la détection et surveillance continues d'un état de raccordement par signaux via le moyen de couplage (15) entre l'unité de manoeuvre (9) et l'au moins un poste homologue de couplage (16),
dans lequel le système de commande (1) est constitué pour la validation de l'entrée d'instructions de commande importantes pour le contrôle, en particulier devant être surveillées directement par un opérateur, au niveau de l'unité de manoeuvre en cas de détection d'un état de couplage établi ou d'un état de raccordement existant, et pour le blocage de l'entrée de l'instruction de commande importante pour le contrôle via l'unité de manoeuvre en cas de détection d'un état de couplage supprimé ou d'un état de raccordement interrompu.

2. Système de commande selon la revendication 1, **caractérisé en ce que** le moyen de couplage (15) présente une extension longitudinale maximale sélectionnée dans une plage entre 2 mètres et 25 mètres.

3. Système de commande selon l'une des revendications 1 ou 2, **caractérisé en ce qu'**au moins toutes les instructions de commande critiques en matière de sécurité des personnes sont classées en tant qu'instructions de commande importantes pour le contrôle.

4. Système de commande selon l'une des revendications précédentes, **caractérisé en ce que** l'au moins un dispositif de couplage (17) est formé par un élément de connexion (21) constitué sur l'unité de manoeuvre (9), ainsi que par un élément de raccordement (22) disposé à une extrémité longitudinale de l'au moins un moyen de couplage (15) et prévu pour le raccordement à l'élément de connexion (21), réalisable sans outil, par liaison de forme et/ou de force.

5. Système de commande selon la revendication 4, **caractérisé en ce que** le dispositif de surveillance de l'état de couplage (23) est constitué par un dispositif de détection de contact de commutation (24) électrique destiné à la détection d'un élément de raccordement (22) couplé à l'élément de connexion (21).

6. Système de commande selon la revendication 4, **caractérisé en ce que** le dispositif de surveillance de l'état de couplage (23) est constitué par un dispositif de capteur (26) à détection sans contact destiné à la détection de la présence et/ou de l'absence de l'élément de raccordement (22) au niveau de l'élément de connexion (21).

7. Système de commande selon l'une des revendications précédentes, **caractérisé en ce qu'**il comprend plusieurs postes homologues de couplage (16) côté machine espacés les uns des autres, postes homologues de couplage (16) auxquels sont affectées respectivement localement des composantes d'installation (3) à commande électrique ou machines à commande électrique ou composantes de machine à commande électrique.

8. Système de commande selon la revendication 7, **caractérisé en ce qu'**un moyen de couplage (15) matériel est affecté, de façon fonctionnellement spécifique, à au moins un des postes homologues de couplage (16) de telle sorte que le poste homologue de couplage (16) correspondant et le moyen de couplage (15) correspondant constituent une paire fonctionnelle.

9. Système de commande selon la revendication 8, **caractérisé en ce que** l'extension longitudinale maximale d'un moyen de couplage (15) respectif est adaptée en ce qui concerne un espacement nécessaire maximal ou admissible maximal de l'unité de manoeuvre (9) par rapport au poste homologue de couplage (16).

10. Système de commande selon l'une des revendications 4 à 9, **caractérisé en ce qu'**au moins un élément de raccordement (22) comporte au moins un identifiant (28) qui comprend ou représente des données d'identification portant sur la composante d'installation (3), machine ou composante de machine affectée au poste homologue de couplage (16) respectif, et **en ce que** l'au moins un dispositif de surveillance de l'état de couplage (23) ou un dispositif de lecture (29) autonome est constitué pour la détection de l'identifiant (28) et pour la transmission de l'identifiant (28) ou des données d'identification à l'au moins un dispositif de commande (7, 10), et **en ce que** le dispositif de commande (7, 10) est, sur la base de l'identifiant (28) ou des données d'identification transmis(es), constitué pour l'affectation et/ou validation, par signaux et/ou informatisée, d'instructions de commande importantes pour le contrôle concernant la composante d'installation (3), machine ou composante de machine respectivement identifiée.

11. Système de commande selon la revendication 10, **caractérisé en ce que**, sur la base de l'identifiant (28) ou des données d'identification transmis(es), ce système est constitué pour la production, automatique ou appelable en fonction des besoins, d'informations concernant la composante d'installation (3), machine ou composante de machine affectée au poste homologue de couplage (16) correspondant, au niveau de l'unité de manoeuvre.

12. Système de commande selon l'une des revendications précédentes, **caractérisé en ce que** le moyen de couplage (15) est formé par un câble (30) électriquement conducteur, et l'au moins un dispositif de couplage (17) est formé par une connexion enfichable (31) électrique, dans lequel le système de commande, en présence d'une liaison physique entre l'unité de manoeuvre (9) et l'au moins un poste homologue de couplage (16) via le moyen de couplage (15), est constitué pour l'alimentation en courant électrique de l'unité de manoeuvre (9) et/ou pour le chargement de l'unité d'alimentation électrique (14) interne de l'unité de manoeuvre (9).

13. Système de commande selon l'une des revendications précédentes, **caractérisé en ce que** le moyen de couplage (15) comprend au moins une ligne de transmission de signaux (33).

14. Système de commande selon la revendication 12 ou 13, **caractérisé en ce que** l'au moins un dispositif de surveillance de l'état de couplage (23) est constitué pour la surveillance continue d'un raccordement électriquement conducteur et/ou pour la surveillance continue d'un raccordement par signaux entre l'unité de manoeuvre (9) et l'au moins un poste homologue de couplage (16).

15. Système de commande selon la revendication 13 ou 14, **caractérisé en ce qu'**il est constitué pour la transmission à l'unité de manoeuvre (9) d'un identifiant (28) informatisé via l'au moins une ligne de transmission de signaux (33), lequel identifiant informatisé comprend des données d'identification portant sur la composante d'installation (3), machine ou composante de machine affectée au poste homologue de couplage (16) respectif, et **en ce que**, sur la base de l'identifiant ou des données d'identification transmis(es), l'unité de manoeuvre (9) est constituée pour l'affectation et/ou validation, par signaux et/ou informatisée, d'instructions de commande importantes pour le contrôle concernant la composante d'installation (3), machine ou composante de machine respectivement identifiée.

16. Système de commande selon la revendication 15, **caractérisé en ce que**, sur la base de l'identifiant informatisé ou de données d'identification transmis(es), l'unité de manoeuvre (9) est constituée pour la production, automatique ou appelable en fonction des besoins, d'informations concernant les composantes d'installation (3), machines ou composantes de machine affectées au poste homologue de couplage (16) correspondant, au niveau de l'unité de manoeuvre (9).

17. Système de commande selon l'une des revendications 13 à 16, **caractérisé en ce que**, en présence d'un raccordement physique et par signaux par le biais de l'au moins un moyen de couplage (15) entre l'unité de manoeuvre (9) et un poste homologue de couplage (16), le système de commande est constitué pour la transmission des instructions de commande importantes pour le contrôle à partir de l'unité de manoeuvre (9) à destination de l'au moins un dispositif de commande (7) via l'au moins un moyen de couplage (15) et le poste homologue de couplage (16).

18. Système de commande selon l'une des revendications 13 à 17, **caractérisé en ce que** l'unité de manoeuvre (9) comporte au moins un élément de commutation de sécurité (35) pouvant être déclenché manuellement, et **en ce que**, en présence d'un raccordement physique ou par signaux, à l'aide d'un moyen de couplage (15) entre l'unité de manoeuvre (9) et le poste homologue de couplage (16), et en cas de déclenchement manuel de l'élément de commutation de sécurité (35), le système de commande (1) est constitué pour la transmission d'un signal de sécurité via le moyen de couplage (15) et le poste homologue de couplage (16) en partant de l'unité de manoeuvre (9) à destination de l'au moins un dispositif de commande (7) ou à destination d'un dispositif de sécurité (25) configuré séparément, dans lequel l'au moins un dispositif de surveillance de l'état de couplage (23) est constitué pour la surveillance continue de la conformité de la liaison par signaux entre l'élément de commutation de sécurité (35) de l'unité de manoeuvre (9) et l'au moins un dispositif de commande (7), ou entre l'élément de commutation de sécurité (35) de l'unité de manoeuvre (9) et le dispositif de sécurité (25) configuré séparément.

19. Système de commande selon l'une des revendications 1 à 11, **caractérisé en ce que** l'au moins un moyen de couplage (15) est formé par un moyen inactif au niveau signalisation, en particulier par une ficelle, une corde, un ruban ou un cordage.

20. Système de commande selon l'une des revendications précédentes, **caractérisé en ce que** l'au moins un poste distant de couplage (16) comprend un dispositif de rangement ou de retenue (18) pour le moyen de couplage (15).
